(19)

Europäisches Patentamt

European Patent Office

Office européen des brevets

(11) **EP 4 273 896 B1**

(12) **EUROPEAN PATENT SPECIFICATION**

(45) Date of publication and mention
of the grant of the patent:
**16.07.2025 Bulletin 2025/29**

(21) Application number: **22172161.6**

(22) Date of filing: **06.05.2022**

(51) International Patent Classification (IPC):
*H01F 27/38* (2006.01)     *H02M 3/335* (2006.01)
*H01F 3/10* (2006.01)      *H01F 3/14* (2006.01)

(52) Cooperative Patent Classification (CPC):
**H01F 3/10; H01F 3/14; H01F 27/38;** H02M 1/0064;
H02M 3/003; H02M 3/01; H02M 3/33584;
Y02B 70/10

(54) **INTEGRATED MAGNETIC COMPONENT FOR A BIDIRECTIONAL LLC RESONANT CONVERTER**

INTEGRIERTE MAGNETISCHE KOMPONENTE FÜR EINEN BIDIREKTIONALEN
LLC-RESONANZWANDLER

COMPOSANT MAGNÉTIQUE INTÉGRÉ POUR UN CONVERTISSEUR RÉSONANT LLC
BIDIRECTIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.11.2023 Bulletin 2023/45**

(73) Proprietor: **Delta Electronics (Thailand) Public
Co., Ltd.
Samutprakarn 10280 (TH)**

(72) Inventor: **Njiende T., Hugues Douglas
33100 Paderborn (DE)**

(74) Representative: **Keller Schneider
Patent- und Markenanwälte AG
Eigerstrasse 2
Postfach
3000 Bern 14 (CH)**

(56) References cited:
**EP-A1- 3 133 614     CN-A- 106 936 320
CN-A- 108 736 734     US-A1- 2018 061 560**

## Description

### Technical Field

The invention relates to an integrated magnetic component for a bidirectional LLC resonant converter with an input converter, an output converter, a transformer, a first series resonant inductance on a primary side of the transformer and a second series resonant inductance on a secondary side of the transformer, the integrated magnetic component comprising a first magnetic core element and a second magnetic core element, wherein each of the first and the second magnetic core elements includes a yoke and at least two legs. The invention further relates to a corresponding bidirectional LLC resonant converter with an input converter, an output converter, a transformer, a series resonant inductance on a primary side of the transformer and a series resonant inductance on a secondary side of the transformer. And the invention further relates to an electric vehicle including such an integrated magnetic component.

### Background Art

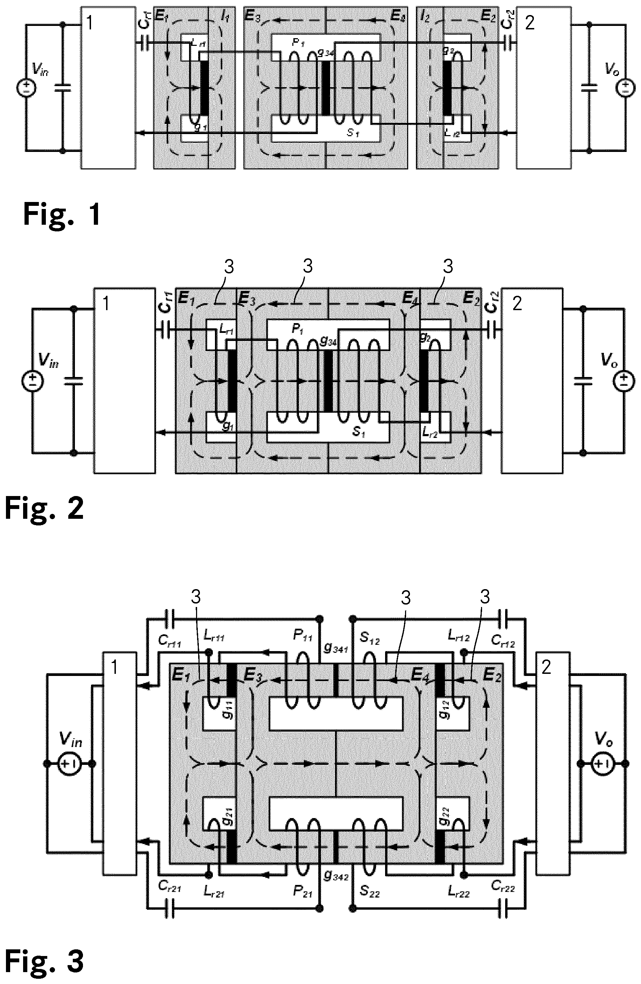

A bidirectional LLC resonant converter typically comprises an input converter, an output converter, a transformer, a series resonant choke (also designated as a series resonant inductance hereinafter) on the primary side of the transformer and series resonant choke on the secondary side of the transformer. In a magnetic component for such a bidirectional LLC resonant converter that is implemented conventionally, which means in a non-integrated manner, the transformer, the input resonant choke and the output resonant choke are usually three separate inductive components that are interconnected accordingly. Fig. 1 shows such a bidirectional LLC resonant converter built with E cores and I cores, where the cores are stacked such that the legs of the E cores are arranged in a row. The two middle E cores (E3, E4) form the magnetic component for the transformer, the magnetic component for the input resonant choke (Lr1) is formed by one E core (E1) and an I core (I1) to close the magnetic circuits of the E core (E1), and the magnetic component for the output resonant choke (Lr2) is formed by one E core (E2) and an I core (I2) to close the magnetic circuits of the E core (E2). The transformer primary winding (P1) is arranged on the inner leg of the first transformer E core (E3) and the transformer secondary winding (S1) is arranged on the inner leg of the second transformer E core (E4). The input resonant choke (Lr1) includes a winding wound on the inner leg of the E core (E1) and the output resonant choke (Lr2) includes a winding wound on the inner leg of the E core (E2). The winding of the input resonant choke (Lr1) is connected in series with the primary winding (P1) and the winding of the output resonant choke (Lr2) is connected in series with the secondary winding (S1).
Air gaps (g$_{34}$, g$_1$, g$_2$) are provided between the inner legs of the transformer E cores (E3, E4) and between the inner legs of the E cores (E1, E2) of the series resonant chokes and the corresponding I cores (I1, I2) as known in the art.
An input converter (1) is fed by an input voltage (Vin) and is connected to the primary side of the magnetic component via a resonant capacitor (Cr1) and the secondary side of the magnetic component is connected to an output converter (2) via a resonant capacitor (Cr2) to provide an output voltage (Vo).
As is clear for one skilled in the art, in the case of a bidirectional LLC resonant converter as shown in fig. 1, the flow of energy may also be directed from the secondary side of the converter to its primary side.
Such bidirectional LLC resonant converters are well known in the art and widely used. However, they have a low power density and efficiency. This is also true for other conventional implementations of bidirectional LLC resonant converters.
CN 106 936 320 A discloses a bidirectional full-bridge LLC resonant converter with two paths. CN 106 936 320 A discloses a transformer with two E cores that are arranged facing each other, with primary side windings being arranged on a first of the two E cores and secondary side windings being arranged on a second of the two E cores, while parallel inductances Lm are provided by suitable gaps. Series inductances are provided by CN 106 936 320 A by known means using an E core and an I core.
CN 108 736 734 A discloses a bidirectional LLC resonant converter. CN 108 736 734 A discloses a magnetic component having two E cores that face each other with their respective legs, and on which two E cores primary and secondary windings are arranged.
EP 3 133 614 A1 discloses an integrated magnetic component for a switched-mode power converter. The integrated magnetic component of EP 3 133 614 A1 can also be used for LLC converter. EP 3 133 614 A1 discloses embodiments of an integrated magnetic component for LLC resonant converters with split resonant chokes.
US 2018/061560A1 discloses multiple-phase power converters having integrated magnetic cores for transformer and inductor windings. US 2018/061560A1 discloses three-phase LLC resonant converters. US 2018/061560A1 discloses an integrated magnetic core with three E cores on which transformer windings and inductor windings for a three-phase DC-to-DC power converter are arranged.

EP 4 273 896 B1

## Summary of the invention

It is the object of the invention to create an integrated magnetic component for a bidirectional LLC resonant converter pertaining to the technical field initially mentioned, that is small and compact with an increased power density and efficiency. It is another object of the invention to create a bidirectional LLC resonant converter pertaining to the technical field initially mentioned that is small and compact with an increased power density and efficiency.

The solution of the invention regarding the integrated magnetic component is specified by the features of claim 1. According to the invention as defined in claim 1 the first and the second magnetic core elements are stacked one on another such that their legs are arranged in a row and wherein a first primary winding part of the transformer is arranged on a first primary winding leg of one of the at least two magnetic core elements, a first secondary winding part of the transformer is arranged on a first secondary winding leg of one of the at least two magnetic core elements, wherein the first primary winding leg and the first secondary winding leg encompass the same magnetic flux. Further according to the invention, the integrated magnetic component includes a third magnetic core element that is stacked to the first magnetic core element and it includes a fourth magnetic core element that is stacked to the second magnetic core element. Further according to the invention, a first series resonant winding part of the first series resonant inductance is arranged on a first series resonant winding leg of the third magnetic core element and is connected in series with the first primary winding part, wherein the first series resonant winding leg and the first primary winding leg encompass the same magnetic flux and wherein a first air gap is provided between the first series resonant winding leg of the third magnetic core element and the first magnetic core element. Further according to the invention, a first series resonant winding part of the second series resonant inductance is arranged on a first series resonant winding leg of the fourth magnetic core element and is connected in series with the first secondary winding part, wherein the first series resonant winding leg of the fourth magnetic core element and the first secondary winding leg of the second magnetic core element encompass the same magnetic flux and wherein a second air gap is provided between the first series resonant winding leg of the fourth magnetic core element and the second magnetic core element.

The feature, that a winding wound on a leg and another winding wound on leg encompass the same magnetic flux means that

- either the windings are wound on the same leg,
- the windings are wound on legs of different core elements where these legs are arranged in a row and face each other with their front side, i.e. the side facing away from the yoke,
- the two legs are legs of the same magnetic component and where theses legs are magnetically connected to each other by a yoke and wherein the yoke does not include any further branches,
- or the two legs are legs of the same magnetic component and where theses legs are magnetically connected to each other by a yoke and wherein the yoke may include further branches but where it is clear, for example due to symmetry reasons, that the magnetic flux is the same through both legs.

Such magnetic core elements with a yoke and two or more legs are well known. In the case of two legs, such core elements are known as U cores. In the case of three legs, such core elements are known as E cores and in the case of four legs, such core elements are known as W cores. Such core elements may also include five or more legs. In each case, such a core element includes a yoke and a number of legs that extend from the yoke, i. e. from the same side of the yoke and in the same direction.

And the term that two legs of the magnetic cores are arranged in a row is simply to be understood such that these legs are arranged coaxially. For example, in the case of E cores, all three legs of two stacked E cores are arranged such that each leg of the first E core is arranged coaxially with a leg of the second E core.

This structure of the integrated magnetic component eliminates the I cores of the same LLC converter implemented conventionally, i. e. where the single inductances are implemented with discrete windings wound around the core elements. These I cores would be arranged between the first and the third core element and between the second and the fourth core element respectively to close the respective magnetic circuit. Generally, by eliminating such I cores, the losses in the yokes of the first and the second magnetic component increase and they may get into saturation more quickly.

The windings of the integrated magnetic component are arranged and connected such that the magnetic fluxes generated in the yokes at least partially compensate each other. Or in more detail: the first primary winding part, the first secondary winding part, the first series resonant winding part of the first series resonant inductance and the first series resonant winding part of the second series resonant inductance are adapted such that a resulting magnetic flux of these winding parts within the yoke of the first magnetic core element at least partially compensate each other and such that a resulting magnetic flux of these winding parts within the yoke of the second magnetic core element at least partially compensate each other.

To achieve an integrated magnetic component for a bidirectional LLC converter having the same properties as a conventional, i. e. non-integrated magnetic component for a bidirectional LLC converter, the number of turns of the windings might have to be adapted as well as the length of the air gaps between the magnetic components.

By such an integration of the magnetic component, the magnetic component can be made smaller and more compact wherefore its power density can be increased.

In addition, flux compensation in the yokes of the two middle core elements leads to core loss reduction. In this first configuration of the invention, the first and the second magnetic core elements are the transformer core elements in which flanges the fluxes are reduced resulting in decreased core losses.

Furthermore, by integrating the transformer and the series resonant chokes into a single integrated magnetic component, continuous winding of the primary windings and the windings for the primary resonant choke as well as continuous winding of the secondary windings and the windings for the secondary resonant choke is possible. Such continuous winding reduces the number of soldered terminations and therewith reduces copper losses and simplifies the production process.

And by integrating the cores of the resonant choke, the input parallel inductance and the transformer, the fluxes in the flanges of the transformer cores are reduced and the core losses in there are decreased. Also, the total volume of the structure is reduced leading to higher power density.

Further, it is to note that the parallel inductance Lm of the LLC converters as described hereinbelow is realised by introducing an air gap in at least one of the transformer core legs.

As outlined above, the first primary winding part is arranged on a first primary winding leg of one of the first or the second magnetic core elements, and a first secondary winding part is arranged on a first secondary winding leg of one of the first or the second magnetic core elements. However, this should not be understood such as to exclude an embodiment according to the first configuration of the invention wherein the first primary winding part is also wound on the first secondary winding leg. The first primary winding part may be wound on the first primary winging leg and the first secondary winding leg. Similarly, the first secondary winding part may also be wound on the first secondary winding leg and the first primary winding leg. Such a variant is also possible for other embodiments of the invention according to the first configuration having two or more primary and secondary winding parts.

In another preferred embodiment of the invention, a second primary winding part of the transformer is arranged on a second primary winding leg of one of the first or the second magnetic core elements. And similarly, a second secondary winding part of the transformer is arranged on a second secondary winding leg of one of the first or the second magnetic core elements, wherein the second primary winding leg and the second secondary winding leg encompass the same magnetic flux.

According to a second configuration not in accordance with the invention, the series resonant inductances in the transformer primary and in the transformer secondary, also designated as resonant chokes, are integrated as well. This is done by arranging the primary and the secondary winding in a distance from each other such as to increase the leakage inductance of the component.

Particularly, the first primary winding part and the first secondary winding part are provided at a first distance from each other to provide a first winding air gap between them. And the second primary winding part and the second secondary winding part are provided at a second distance from each other to provide a second winding air gap between them. The first distance and the second distance are usually the same but, depending on the particular application, they might also be different.

The first winding air gap generates a first leakage inductance and the second winding air gap generates a second leakage inductance. These leakage inductances are then comprised by the first series resonant inductance and the second series resonant inductance. The series resonant inductances may also include other inductances but they may also consist of the generated leakage inductances. Further, it is to note that both leakage inductances generated by the two winding air gaps do have an influence on both series resonant inductances. So, by changing one of the two winding air gaps, both series resonant inductances change.

By such a full integration of the magnetic component, the magnetic component can be made smaller and more compact wherefore its volume can be decreased and its power density can be increased.

Furthermore, by replacing the series resonant chokes by the windings air gaps, less soldered terminations are required which results in reduced copper losses and simplifies the production process.

And by integrating the cores of the resonant choke, the input parallel inductance and the transformer, the fluxes in the flanges of the transformer cores are reduced and the core losses in there are decreased.

It is to note that the first distance between the first primary winding part and the first secondary winding part may either be the distance in a longitudinal direction of the windings, or it may be the distance between the windings measured at right angles to the longitudinal direction of the winding, which is for example the case in an embodiment where the first primary winding is wound on a first leg of a U core and where the first secondary winding is wound on the second leg of that U core. The same of course also applies to the second distance between the second primary winding part and the second secondary winding part and possibly further pairs of primary and secondary windings parts.

In a preferred embodiment of the invention, each magnetic core element is a U core element.

Therefore, in the integrated magnetic component according to the second configuration not in accordance with the invention, both legs of the first U core are primary winding legs and both legs of the second U core are secondary winding legs.

Regarding the first configuration of the invention, a second series resonant winding part of the first series resonant inductance is arranged on a second series resonant winding leg of the third magnetic core element and is connected in series with the second primary winding part, wherein the second series resonant winding leg of the third magnetic core element and the second primary winding leg encompass the same magnetic flux and wherein a third air gap is provided between the second series winding leg of the third magnetic core element and the first magnetic core element, a second series resonant winding part of the second series resonant inductance is arranged on a second series resonant winding leg of the fourth magnetic core element and is connected in series with the second secondary winding part, wherein the second series resonant winding leg of the fourth magnetic core element and the secondary winding leg encompass the same magnetic flux and wherein a fourth air gap is provided between the second series resonant winding leg of the fourth magnetic core element and the second magnetic core element. And further, the first and the second primary winding part, the first and the second secondary winding part, the first and the second series resonant winding part of the first series resonant inductance and the first and the second series resonant winding part of the second series resonant inductance are adapted such that a resulting magnetic flux of these winding parts within the yoke of the first magnetic core element at least partially compensate each other and such that a resulting magnetic flux of these winding parts within the yoke of the second magnetic core element at least partially compensate each other.

Hence, in the case of U cores, both legs of each core element carries a winding part, either a primary winding part, a secondary winding part or a series resonant winding part.

In another preferred embodiment, each magnetic core element is an E core element, wherein each primary winding leg and each secondary winding leg is an outer leg of the E core elements.

The winding parts are preferably arranged and connected such that the magnetic flux in the outer legs of the E core elements flows in the same direction and the inner legs serve as a return path for the magnetic flux in the other direction.

Regarding the first configuration of the invention, there exists another preferred embodiment wherein each magnetic core element is an E core element. In this embodiment, each primary winding leg and each secondary winding leg is an inner leg of the E core elements. In this case, the winding parts are preferably arranged and connected such that the magnetic flux in the inner legs flows in the same direction and the outer legs serve as return paths for the magnetic flux in the other direction.

In another preferred embodiment, each magnetic core element is an W core element with a yoke and four legs wherein each primary winding leg and each secondary winding leg is an inner leg.

The winding parts are preferably arranged and connected such that the magnetic flux in the inner legs of the W core elements flows in the same direction and the two outer legs serve as return paths for the magnetic flux in the other direction.

In a further preferred embodiment, each magnetic core element is a five-leg core element with a yoke and five legs. In this embodiment, a third primary to secondary winding path is provided, in that a third primary winding part of the transformer is arranged on a third primary winding leg of one of the first or the second magnetic core elements. And a third secondary winding part of the transformer is arranged on a third secondary winding leg of one of the first or the second magnetic core elements, wherein the third primary winding leg and the third secondary winding leg encompass the same magnetic flux.

In such a five leg core component, preferably the first and the third primary winding leg and the first and the third secondary winding leg is an outer leg and the second primary winding leg and the second secondary winding leg is a centre leg.

Further, the winding parts are preferably arranged and connected such that the magnetic flux in the two outer legs and in the centre leg of the W core elements flows in the same direction and the other two inner legs serve as return paths for the magnetic flux in the other direction.

Regarding the first configuration of the invention, there is another preferred embodiment of such a five-leg core component, wherein the first, the second and the third primary winding leg and the first, the second and the third secondary winding leg is an inner leg of the W core elements.

And again, the winding parts are preferably arranged and connected such that the magnetic flux in the primary and secondary winding legs of the W core elements flows in the same direction and the other two outer legs of the W core elements serve as return paths for the magnetic flux in the other direction.

The above described embodiments including magnetic core elements having four or more legs may for example be used for interleaved two or three rails LLC converters.

Regarding another preferred embodiment, a filling element made of permeable material is provided within at least one of the winding air gaps to increase the leakage inductance and reduce fringing fields caused by the windings air gaps. Preferably, all winding air gaps are filled with such a filling element.

As often used in magnetic applications and widely available, the permeable material is preferably ferrite or iron powder.

The winding air gaps provided between the primary windings parts and the secondary winding parts may cause fringing fields. These fringing fields may penetrate the material surrounding the magnetic component and thus generate losses. For example, if the component is mounted in an aluminium chassis, these stray fields can penetrate the chassis and cause losses.

To prevent these fringing fields from penetrating the surrounding material, the cavity in which the component is placed could, for example, be made significantly larger than the component itself. However, this is unfavourable because a lot of space is lost. And moreover, a lot of potting material would have to be used to pot the magnetic component in the chassis. And as the potting material is water cooled for cooling the magnetic component, the thermal resistance would be increased which decreases the cooling capabilities.

Preferably, these fringing fields are therefore shielded with magnetically permeable material arranged around the magnetic component. Particularly, a plate made of permeable material is provided on each surface of the integrated magnetic component that is arranged in parallel to the legs of the magnetic core elements to contain fringing fields caused by the windings air gaps. The upper and lower surfaces are shielded by the yokes of the core elements.

These shielding plates therefore reduce the induced AC losses considerably. They also increase the leakage inductance, which means that the distances between the windings can be reduced to achieve the same level of inductance compared to an integrated magnetic component without such shielding plates. Moreover, this shielding improves the overall electromagnetic interference.

The invention further relates to a bidirectional LLC converter. A bidirectional LLC converter includes an input converter, an output converter, a transformer, a series resonant inductance on a primary side of the transformer and a series resonant inductance on a secondary side of the transformer. According to the invention, the bidirectional LLC converter further includes an integrated magnetic component as described hereinbefore.

The input converter as well as the output converter may be realised in different ways, depending on the particular application. The input converter may for example be implemented as a single unit that provides the currents as needed to a single bidirectional LLC converter or to multiple bidirectional LLC converters in the case of interleaved LLC converters that is to be implemented using the integrated magnetic component according to the invention. The input converter may however also include a sub-converter for each LLC converter or consist of a number of separately controlled converter units. The same is true for the output converter.

In a preferred embodiment of the invention, the bidirectional LLC resonant converter further includes two resonant capacitors.

The resonant capacitors are provided between the input converter and the series resonant input inductance as well as between the series resonant output inductance and the output converter.

The bidirectional LLC resonant converter may also include additional components such as for example rectifiers or filter capacitors.

The invention further relates to an electric vehicle. An electric vehicle according to the invention includes an integrated magnetic component as described hereinbefore. Preferably, the electric vehicle includes a chassis having a cavity, wherein the integrated magnetic component is potted within the cavity.

Other advantageous embodiments and combinations of features come out from the detailed description below and the entirety of the claims.

**Brief description of the drawings**

The drawings used to explain the embodiments show:

Fig. 1     a prior art bidirectional LLC resonant converter;

Fig. 2     an integrated magnetic component according to the first configuration of the invention including four E cores with the windings wound on the centre legs of the E cores;

Fig. 3     an integrated magnetic component according to the first configuration of the invention including four E cores with the windings wound on the outer legs of the E cores;

Fig. 4     an integrated magnetic component according to the first configuration of the invention including four U cores with the windings wound on both legs of the U cores;

Fig. 5     an integrated magnetic component according to the first configuration of the invention including four W cores with the windings wound on the inner legs of the W cores;

Fig. 6    an integrated magnetic component according to the first configuration of the invention including four five-leg cores with the windings wound on the two outer legs and the centre leg of the W cores;

Fig. 7    an integrated magnetic component according to the first configuration of the invention including four five-leg cores with the windings wound on the three inner legs of the five-leg cores;

Fig. 8    an integrated magnetic component according to the first configuration of the invention including four E cores with the windings wound on all three legs of the E cores;

Fig. 9    an integrated magnetic component according to the second configuration not in accordance with the invention including two U cores with the windings wound on both legs of the U cores;

Fig. 10    the integrated magnetic component shown in fig. 9 in a perspective view;

Fig. 11    a first variation of an integrated magnetic component according to the second configuration not in accordance with the invention based on the integrated magnetic component shown in fig. 9 in a perspective view;

Fig. 12    a second variation of an integrated magnetic component according to the second configuration not in accordance with the invention based on the integrated magnetic component shown in fig. 9 in a perspective view;

Fig. 13    a third variation of an integrated magnetic component according to the second configuration not in accordance with the invention based on the integrated magnetic component shown in fig. 9 in a perspective view;

Fig. 14    a fourth variation of an integrated magnetic component according to the second configuration not in accordance with the invention based on the integrated magnetic component shown in fig. 9 in a perspective view;

Fig. 15    a fifth variation of an integrated magnetic component according to the second configuration not in accordance with the invention based on the integrated magnetic component shown in fig. 9 in a perspective view;

Fig. 16    a sixth variation of an integrated magnetic component according to the second configuration not in accordance with the invention based on the integrated magnetic component shown in fig. 9 in a perspective view;

Fig. 17    an integrated magnetic component according to the second configuration not in accordance with the invention with filling elements of permeable material shown in a non-inserted state;

Fig. 18    the integrated magnetic component of fig. 17 with inserted filling elements;

Fig. 19    an integrated magnetic component according to the second configuration not in accordance with the invention with shielding in a an explosive view;

Fig. 20    the integrated magnetic component of fig. 19 in a perspective view;

Fig. 21    an integrated magnetic component according to the second configuration not in accordance with the invention including two E cores with the windings wound on the two outer legs of the E cores;

Fig. 22    an integrated magnetic component according to the second configuration not in accordance with the invention including two W cores with the windings wound on the two inner legs of the W cores;

Fig. 23    an integrated magnetic component according to the second configuration not in accordance with the invention including two five-leg cores with the windings wound on the two outer legs and the centre leg of the five-leg cores;

Fig. 24    an integrated magnetic component according to the second configuration not in accordance with the invention including two E cores and an I core with the windings wound on the inner legs of the E cores;

Fig. 25    an integrated magnetic component according to the second configuration not in accordance with the invention including three E cores and an I core with the windings wound on the inner legs of the E cores;

Fig. 26    an integrated magnetic component according to the second configuration not in accordance with the invention including two U cores and an I core with the windings wound on both legs of the U cores;

Fig. 27    an integrated magnetic component according to the second configuration not in accordance with the invention including three U cores and an I core with the windings wound on both legs of the U cores;

Fig. 28    a cross section of a magnetic component according to the second configuration not in accordance with the invention as shown in fig. 9 and

Fig. 29    the MMF curve for the magnetic component of fig. 28.

In the figures, the same components are given the same reference symbols.

**Preferred embodiments**

In all presented embodiments, the parallel inductance Lm of LLC converter is realised by introducing an air gap in the transformer core leg. Primary windings and secondary windings of transformers can each be fractioned and interleaved in order to reduce AC copper losses.

Fig. 2 shows an integrated magnetic component according to the first configuration of the invention including four E cores E1, E2, E3, E4 with the windings wound on the centre legs of the E cores. This integrated magnetic component may be used for interleaved bidirectional LLC resonant converters, for example for two phase interleaved bidirectional LLC resonant converters.

The cores are stacked one on each other such that the legs of the E cores are arranged in a row. The two middle E cores E3, E4 are arranged such that their legs face each other and the two outer E cores E1, E2 are arranged such that their legs face the yokes of the middle E cores E3, E4 respectively.

The two middle E cores E3, E4 are the transformer core elements. A first primary winding P1 of the transformer is arranged on the inner leg of the first transformer E core E3 and a first secondary winding S1 is arranged on the inner leg of the second transformer E core E4. The input resonant choke includes a winding Lr1 wound on the inner leg of the third E core E1 and the output resonant choke includes a winding Lr2 wound on the inner leg of the fourth E core E2. The winding Lr1 of the input resonant choke is connected in series with the primary winding P1 and the winding Lr2 of the output resonant choke is connected in series with the secondary winding S1.

For reasons of convenience, the primary winding P1 as well as the secondary winding S1 are shown to be wound on a single leg only. For example, the primary winding P1 is shown to be wound on the middle leg of the transformer E core E3. But as already mentioned further above, the primary winding P1 may also include a section that is wound on the middle leg the other transformer E core E4 such that the primary winding is wound on the middle leg of both transformer E cores E3, E4. And similarly the secondary winding S1 may also be wound on the middle leg of both transformer E cores E3, E4.

In fact, in the embodiments according to the first configuration of the invention as described below, the primary windings as well as the secondary windings may be wound on the corresponding leg of the other transformer core as well.

Contrary to the conventional magnetic component shown in fig. 1, the magnetic circuits of the E cores E1, E2 of the series resonant chokes are not closed by separate and additional I cores, but by the yokes of the transformer E cores E3, E4.

Air gaps $g_{34}$, $g_1$, $g_2$ are provided between the inner legs of the transformer E cores E3, E4 and between the inner legs of the E cores E1, E2 of the series resonant chokes and the yokes of the transformer E cores respectively.

Accordingly, the I cores have been removed. This is possible because the primary winding P1, the secondary winding S1, the winding Lr1, Lr2 of the input and output resonant chokes are arranged and connected in such a way that the magnetic flux in the yokes of the transformer E cores E3, E4 at least partially compensate each other to avoid saturation as shown by the magnetic flux lines 3. Furthermore, the number of turns of the windings and the length of the air gaps may have to be adapted in dependency of the elements used for the magnetic component and in dependency of the particular application.

Further, an input converter 1 is fed by an input voltage Vin across an input capacitor and is connected to the primary side of the magnetic component via a resonant capacitor Cr1. And the secondary side of the magnetic component is connected to an output converter 2 via a resonant capacitor Cr2 to provide an output voltage Vo across an output capacitor. However, it is clear for one skilled in the art, that, in the case of a bidirectional LLC resonant converter, the flow of energy may not only be directed from the primary side to the secondary side of the transformer but may also be directed from the secondary side to the primary side of the transformer. This paragraph is also true for the integrated magnetic component presented hereinafter in relation to the integrated magnetic component according to the first configuration of the invention.

In some embodiments described hereinafter, the resonant input capacitor may either be connected between the input converter 1 and a primary winding or between the input converter 1 and a winding of the primary series resonant inductance. And the resonant output capacitor may either be connected between a secondary primary winding and the output converter 2 or between a winding of the secondary series resonant inductance and the output converter 2.

In some embodiments described hereinafter, the resonant input capacitor may also be connected between two primary or secondary windings parts.

In each case however, the resonant capacitors are connected in series with the primary or secondary windings respectively, either directly or indirectly.

In the case of interleaved LLC converters, the resonant capacitors are split into two or more resonant capacitors such that the resonance circuit of each converter has its own resonant capacitor.

Some of the embodiments shown in the drawings and described below may be used for interleaved LLC converters. For reasons of convenience, the resonant capacitors in these embodiments are shown to be connected in a star connection. However, the resonant capacitors may, where applicable, also be connected in a delta connection.

Fig. 3 shows an integrated magnetic component according to the first configuration of the invention including four E cores with the windings wound on the outer legs of the E cores. This integrated magnetic component may for example be used for single phase bidirectional LLC resonant converters with two transformers.

The E cores E1, E2, E3, E4 are stacked one on each other such that the legs of the E cores E1, E2, E3, E4 are arranged in a row. The two middle E cores E3, E4 are arranged such that their legs face each other and the two outer E cores E1, E2 are arranged such that their legs face the yokes of the middle E cores E3, E4 respectively.

The two middle E cores E3, E4 are the transformer core elements. A first primary winding P11 of the transformer is arranged on a first outer leg of the first transformer E core E3 and a second primary winding P21 of the transformer is arranged on a second outer leg of the first transformer E core E3. A first secondary winding S12 is arranged on a first outer leg of the second transformer E core E4 and a second secondary winding S22 is arranged on the second outer leg of the second transformer E core E4. The input resonant choke includes a first winding Lr11 wound on the first outer leg of the third E core E1 and a second winding Lr21 wound on the second outer leg of the third E core E1. And the output resonant choke includes a winding Lr12 wound on the first outer leg of the fourth E core E2 and a second winding Lr22 wound on the second outer leg of the fourth E core E2. The winding Lr11 of the input resonant choke is connected in series with the first primary winding P11, the winding Lr21 of the input resonant choke is connected in series with the second primary winding P21, the winding Lr12 of the output resonant choke is connected in series with the first secondary winding S12 and the winding Lr22 of the output resonant choke is connected in series with the second secondary winding S22.

Again, the magnetic circuits of the E cores E1, E2 of the series resonant chokes are closed by the yokes of the transformer E cores E3, E4.

Air gaps $g_{341}$, $g_{342}$, $g_{11}$, $g_{21}$, $g_{12}$, $g_{22}$ are provided between the outer legs of the transformer E cores E3, E4 and between the outer legs of the E cores E1, E2 of the resonant chokes and the yokes of the transformer E cores respectively.

Again, the primary windings P11, P21, the secondary winding S12, S22 and the windings Lr11, Lr21, Lr12, Lr22 of the resonant chokes are arranged and connected in such a way that the magnetic flux in the yokes of the transformer E cores E3, E4 at least partially compensate each other as shown by the magnetic flux lines 3. And again, the number of turns of the windings and the length of the air gaps may have to be adapted in dependency of the elements used for the magnetic component and in dependency of the particular application.

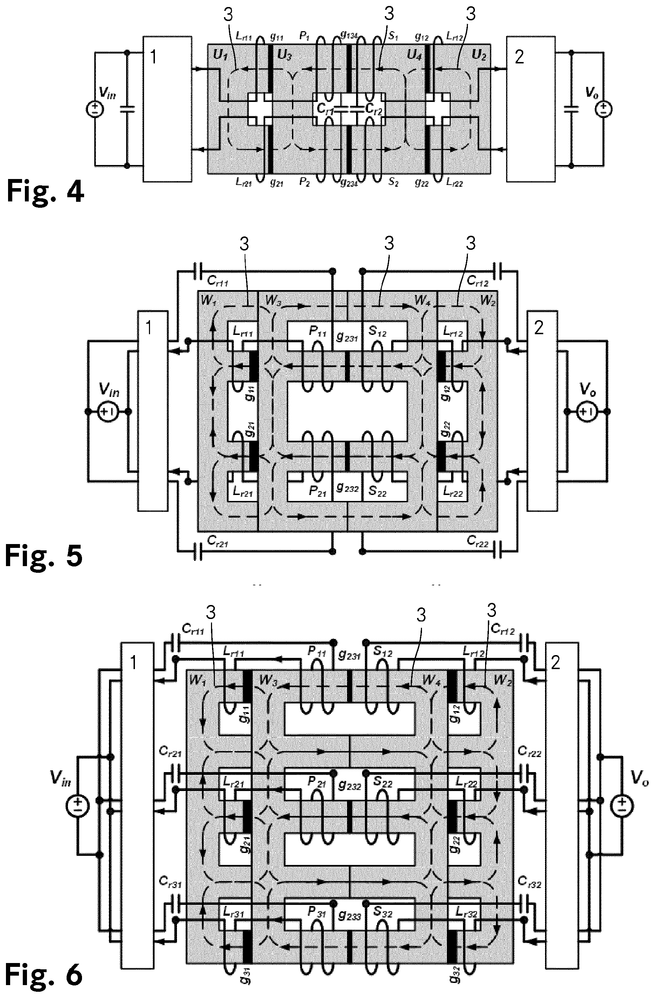

Fig. 4 shows an integrated magnetic component according to the first configuration of the invention including four U cores with the windings wound on both legs of the U cores. This integrated magnetic component may be used for bidirectional LLC resonant converters.

The U cores U1, U2, U3, U4 are stacked one on each other such that their legs are arranged in a row. The two middle U cores U3, U4 are arranged such that their legs face each other and the two outer U cores U1, U2 are arranged such that their legs face the yokes of the middle U cores U3, U4 respectively.

The two middle U cores U3, U4 are the transformer core elements. A first primary winding P1 of the transformer is arranged on a first leg of the first transformer U core U3 and a second primary winding P2 of the transformer is arranged on a second leg of the first transformer U core U3. A first secondary winding S1 is arranged on a first leg of the second transformer U core U4 and a second secondary winding S2 is arranged on the second leg of the second transformer U core U4. The input resonant choke includes a first winding Lr11 wound on the first leg of the third U core U1 and a second winding Lr21 wound on the second leg of the third U core U1. The output resonant choke includes a winding Lr12 wound on the first leg of the fourth U core U2 and a winding Lr22 wound on the second leg of the fourth U core U2. The windings Lr11, Lr21 of the input resonant choke are connected in series with the corresponding primary windings P1, P2 respectively and the winding Lr12, Lr22 of the output resonant choke are connected in series with the corresponding secondary winding S1, S2 respectively.

Again, the magnetic circuits of the U cores U1, U2 of the series resonant chokes are closed by the yokes of the transformer U cores U3, U4.

Air gaps $g_{134}$, $g_{234}$, $g_{11}$, $g_{21}$, $g_{12}$, $g_{22}$ are provided between the legs of the transformer U cores U3, U4 and between the legs of the U cores U1, U2 of the resonant chokes and the yokes of the transformer U cores respectively.

Again, the primary windings P1, P2, the secondary windings S1, S2 and the windings Lr11, Lr21, Lr12, Lr22 of the resonant chokes are arranged and connected in such a way that the magnetic flux in the yokes of the transformer U cores U3, U4 at least partially compensate each other as shown by the magnetic flux lines 3. And again, the number of turns of the windings and the length of the air gaps may have to be adapted in dependency of the elements used for the magnetic component and in dependency of the particular application.

Fig. 5 shows an integrated magnetic component according to the first configuration of the invention including four W cores with the windings wound on the inner legs of the W cores. This integrated magnetic component may be used for interleaved bidirectional LLC resonant converters for example for two phase interleaved bidirectional LLC resonant converters.

The primary and the secondary windings of the transformer of the interleaved converters are wound each on inner legs of the transformer core elements, the windings of the input resonant chokes of both interleaved converters are wound each on one inner leg of a first outer core element and the windings of the output resonant choke of both interleaved converters are wound each on one inner leg of a second outer core element.

The W cores W1, W2, W3, W4 are stacked one on each other such that their legs are arranged in a row. The two middle W cores W3, W4 are arranged such that their legs face each other and the two outer W cores W1, W2 are arranged such that their legs face the yokes of the middle W cores W3, W4 respectively.

The two middle W cores W3, W4 are the transformer core elements. A first primary winding P11 of the transformer is arranged on a first inner leg of the first transformer W core W3 and a second primary winding P21 of the transformer is arranged on a second inner leg of the first transformer W core W3. A first secondary winding S12 is arranged on a first inner leg of the second transformer W core W4 and a second secondary winding S22 is arranged on the second inner leg of the second transformer W core W4.

The input resonant choke includes a first winding Lr11 wound on the first inner leg of the third W core W1 and a second winding Lr21 wound on the second inner leg of the third W core W1. The output resonant choke includes a first winding Lr12 wound on the first inner leg of the fourth W core W2 and a second winding Lr22 wound on the second inner leg of the fourth W core W2. The windings Lr11, Lr21 of the input resonant choke are connected in series with the corresponding primary windings P11, P21 respectively and the windings Lr12, Lr22 of the output resonant choke are connected in series with the corresponding secondary windings S12, S22 respectively.

Again, the magnetic circuits of the W cores W1, W2 of the series resonant chokes are closed by the yokes of the transformer W cores W3, W4.

Air gaps $g_{231}$, $g_{232}$, $g_{11}$, $g_{21}$, $g_{12}$, $g_{22}$ are provided between the inner legs of the transformer W cores W3, W4 and between the inner legs of the W cores W1, W2 of the resonant chokes and the yokes of the transformer W cores respectively.

Again, the primary windings P11, P21, the secondary windings S12, S22 and the windings Lr11, Lr21, Lr12, Lr22 of the resonant chokes are arranged and connected in such a way that the magnetic flux in the yokes of the transformer W cores W3, W4 at least partially compensate each other as shown by the magnetic flux lines 3. And again, the number of turns of the windings and the length of the air gaps may have to be adapted in dependency of the elements used for the magnetic component and in dependency of the particular application.

Fig. 6 shows an integrated magnetic component according to the first configuration of the invention including four five-leg cores. This integrated magnetic component may be used for three interleaved bidirectional LLC resonant converters with the windings of the interleaved converters wound on the two outer legs and the centre leg of the five-leg cores.

The five-leg cores W1, W2, W3, W4 are stacked one on each other such that their legs are arranged in a row. The two middle five-leg cores W3, W4 are arranged such that their legs face each other and the two outer five-leg cores W1, W2 are arranged such that their legs face the yokes of the middle five-leg cores W3, W4 respectively.

The two middle five-leg cores W3, W4 are the transformer core elements. A first primary winding P11 of the transformer for three interleaved converters is arranged on a first outer leg of the first transformer five-leg core W3, a second primary winding P21 of the transformer is arranged on the centre leg of the first transformer five-leg core W3 and a third primary winding P31 of the transformer is arranged on the second outer leg of the first transformer five-leg core W3. A first secondary winding S12 of the transformer for three interleaved converters is arranged on a first outer leg of the second transformer five-leg core W4, a second secondary winding S22 is arranged on the centre leg of the second transformer five-leg core W4 and a third secondary winding S32 is arranged on the second outer leg of the second transformer five-leg core W4.

The input resonant choke for three interleaved converters includes a first winding Lr11 wound on the first outer leg of the third five-leg core W1, a second winding Lr21 wound on the centre leg of the third five-leg core W1 and a third winding Lr31 wound on the second outer leg of the third five-leg core W1. The output resonant choke for three interleaved converters includes a first winding Lr12 wound on the first outer leg of the fourth five-leg core W2, a second winding Lr22 wound on the centre leg of the fourth five-leg core W2 and a third winding Lr32 wound on the second outer leg of the fourth five-leg core W2. The windings Lr11, Lr21, Lr31 of the input resonant choke are connected in series with the corresponding primary windings P11, P21, P31 respectively and the windings Lr12, Lr22, Lr32 of the output resonant choke are connected in series with the corresponding secondary windings S12, S22, S32 respectively.

Accordingly, the two outer legs and the centre legs of the five-leg cores W3, W4 are the transformer legs and the remaining two inner legs of the five-leg cores W3, W4 serve as flux return legs. And the two outer legs and the centre legs of the outer five-leg cores W1, W2 are the choke legs and the remaining two inner legs of the outer five-leg cores W1, W2 serve as flux return legs. Hence, each flux return core section is placed between either two transformer legs or two choke legs.

Again, the magnetic circuits of the five-leg cores W1, W2 of the series resonant chokes are closed by the yokes of the transformer five-leg cores W3, W4.

Air gaps $g_{231}$, $g_{232}$, $g_{233}$, $g_{11}$, $g_{21}$, $g_{31}$, $g_{12}$, $g_{22}$, $g_{32}$ are provided between the outer legs and the centre leg of the transformer five-leg cores W3, W4 and between the outer legs and the centre leg of the five-leg cores W1, W2 of the resonant chokes and the yokes of the transformer five-leg cores respectively.

Again, the primary windings P11, P21, P31, the secondary windings S12, S22, S32 and the windings Lr11, Lr21, Lr31, Lr12, Lr22, Lr32 of the resonant chokes are arranged and connected in such a way that the magnetic flux in the yokes of the transformer five-leg cores W3, W4 at least partially compensate each other as shown by the magnetic flux lines 3. And again, the number of turns of the windings and the length of the air gaps may have to be adapted in dependency of the elements used for the magnetic component and in dependency of the particular application.

Additionally, the transformer and the choke of each LLC converter share one return core leg which reduces core losses and volume of the component.

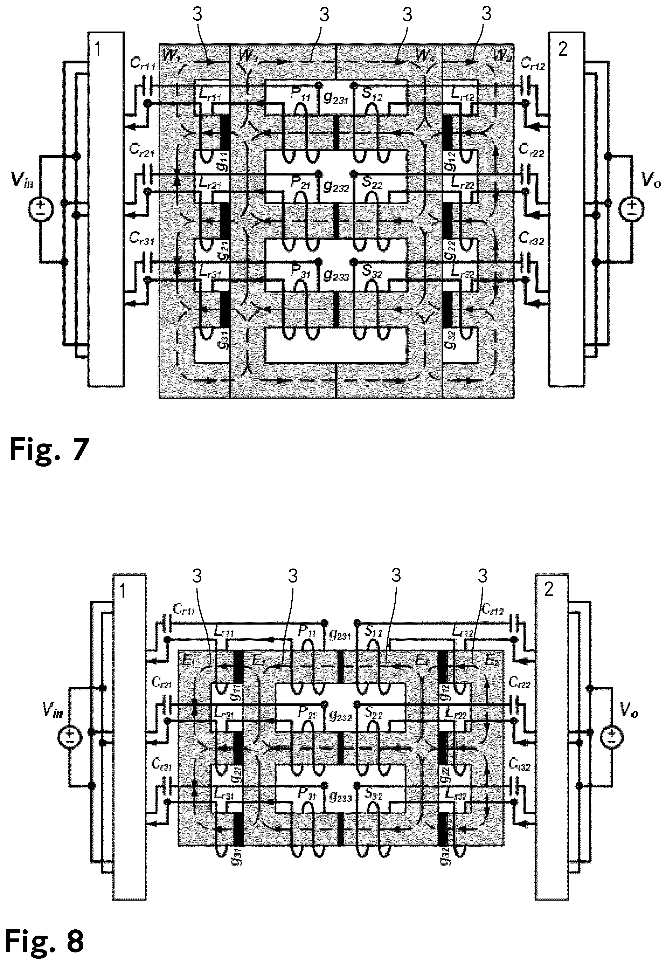

Fig. 7 shows an integrated magnetic component according to the first configuration of the invention including four five-leg cores. This integrated magnetic component may be used for three interleaved bidirectional LLC resonant converters with the windings of the interleaved converters wound on the three inner legs of the W cores.

The five-leg cores W1, W2, W3, W4 are stacked one on each other such that their legs are arranged in a row. The two middle five-leg cores W3, W4 are arranged such that their legs face each other and the two outer five-leg cores W1, W2 are arranged such that their legs face the yokes of the middle five-leg cores W3, W4 respectively.

The two middle five-leg cores W3, W4 are the transformer core elements. A first primary winding P11 of the transformer for three interleaved converters is arranged on a first inner leg of the first transformer five-leg core W3, a second primary winding P21 of the transformer is arranged on the centre leg of the first transformer five-leg core W3 and a third primary winding P31 of the transformer is arranged on the third inner leg of the first transformer five-leg core W3. Similarly, a first secondary winding S12 of the transformer for three interleaved converters is arranged on a first inner leg of the second transformer five-leg core W4, a second secondary winding S22 is arranged on the centre leg of the second transformer five-leg core W4 and a third secondary winding S32 is arranged on the third inner leg of the second transformer five-leg core W4.

The input resonant choke for three interleaved converters includes a first winding Lr11 wound on the first inner leg of the third five-leg core W1, a second winding Lr21 wound on the centre leg of the third five-leg core W1 and a third winding Lr31 wound on the third inner leg of the third five-leg core W1. The output resonant choke for three interleaved converters includes a first winding Lr12 wound on the first inner leg of the fourth five-leg core W2, a second winding Lr22 wound on the centre leg of the fourth five-leg core W2 and a third winding Lr32 wound on the third inner leg of the fourth five-leg core W2. The windings Lr11, Lr21, Lr31 of the input resonant choke are connected in series with the corresponding primary windings P11, P21, P31 respectively and the windings Lr12, Lr22, Lr32 of the output resonant choke are connected in series with the corresponding secondary windings S12, S22, S32 respectively.

Accordingly, the three inner legs of the five-leg cores W3, W4 are the transformer legs and the two outer legs of the five-leg cores W3, W4 serve as flux return legs. And the three inner legs of the outer five-leg cores W1, W2 are the choke legs and the two outer legs of the outer five-leg cores W1, W2 serve as flux return legs.

Again, the magnetic circuits of the five-leg cores W1, W2 of the series resonant chokes are closed by the yokes of the transformer five-leg cores W3, W4.

Air gaps $g_{231}$, $g_{232}$, $g_{233}$, $g_{11}$, $g_{21}$, $g_{31}$, $g_{12}$, $g_{22}$, $g_{32}$ are provided between the three inner legs and of the transformer five-leg cores W3, W4 and between the three inner legs of the five-leg cores W1, W2 of the resonant chokes and the yokes of the transformer five-leg cores respectively.

Again, the primary windings P11, P21, P31, the secondary windings S12, S22, S32 and the windings Lr11, Lr21, Lr31, Lr12, Lr22, Lr32 of the resonant chokes are arranged and connected in such a way that the magnetic flux in the yokes of the transformer five-leg cores W3, W4 at least partially compensate each other as shown by the magnetic flux lines 3. And again, the number of turns of the windings and the length of the air gaps may have to be adapted in dependency of the elements used for the magnetic component and in dependency of the particular application.

Fig. 8 shows an integrated magnetic component according to the first configuration of the invention including four E cores with the windings wound on all three legs of the E cores. This integrated magnetic component may be used for three interleaved bidirectional LLC resonant converters with the windings of the interleaved converters wound on the three legs of the E cores

The E cores E1, E2, E3, E4 are stacked one on each other such that the legs of the E cores E1, E2, E3, E4 are arranged in a row. The two middle E cores E3, E4 are arranged such that their legs face each other and the two outer E cores E1, E2 are arranged such that their legs face the yokes of the middle E cores E3, E4 respectively.

The two middle E cores E3, E4 are the transformer core elements. A first primary winding P11 of the transformer is arranged on a first outer leg of the first transformer E core E3, a second primary winding P21 of the transformer is arranged on the centre leg of the first transformer E core E3 and a third primary winding P31 of the transformer is arranged on the second outer leg of the first transformer E core E3. A first secondary winding S12 is arranged on a first outer leg of the second transformer E core E4, a second secondary winding S22 is arranged on the centre leg of the second transformer E core E4 and a third secondary winding S32 is arranged on the second outer leg of the second transformer E core E4. The input resonant choke includes a first winding Lr11 wound on the first outer leg of the third E core E1, a second winding Lr21 wound on the centre leg of the third E core E1 and a third winding Lr31 wound on the second outer leg of the third E core E1. And the output resonant choke includes a first winding Lr12 wound on the first outer leg of the fourth E core E2, a second winding Lr22 wound on the centre leg of the fourth E core E2 and a third winding Lr32 wound on the second outer leg of the fourth E core E2.

The winding Lr11 is connected in series with the primary winding P11, the winding Lr21 is connected in series with the primary winding P21 and the winding Lr31 is connected in series with the primary winding P31. Further, the winding Lr12 is connected in series with the secondary winding S12, the winding Lr22 is connected in series with the secondary winding S22 and the winding Lr32 is connected in series with the secondary winding S32.

Again, the magnetic circuits of the E cores E1, E2 of the series resonant chokes are closed by the yokes of the transformer E cores E3, E4.

Air gaps $g_{231}$, $g_{232}$, $g_{233}$, $g_{11}$, $g_{21}$, $g_{31}$, $g_{12}$, $g_{22}$, $g_{32}$ are provided between the legs of the transformer E cores E3, E4 and between the legs of the E cores E1, E2 of the resonant chokes and the yokes of the transformer E cores respectively.

Again, the primary windings P11, P21, P31, the secondary windings S12, S22, S32 and the windings Lr11, Lr21, Lr31, Lr12, Lr22, Lr32 of the resonant chokes are arranged and connected in such a way that the magnetic flux in the yokes of the transformer E cores E3, E4 at least partially compensate each other as shown by the magnetic flux lines 3. And again, the number of turns of the windings and the length of the air gaps may have to be adapted in dependency of the elements used for the magnetic component and in dependency of the particular application.

As can be seen in fig. 8, there is no particular leg that serves as a return path for the magnetic flux. Such a return path is not required in this embodiment because the input converter 1 as well as the output converter 2 are adapted to control the currents through these windings such that the currents through the windings on the legs of the E cores are phase-shifted to each other by 120°. Accordingly, the sum of these currents is always zero wherefore no specific return path is needed. Such converters may however require increased electronic effort in the input converter 1 and/or the output converter 2. Accordingly, the three legs of the E cores E3, E4 are the transformer legs and as outlined above, no return legs are necessary. Similarly, the three legs of the outer E cores E1, E2 are the choke legs and no particular return legs are necessary.

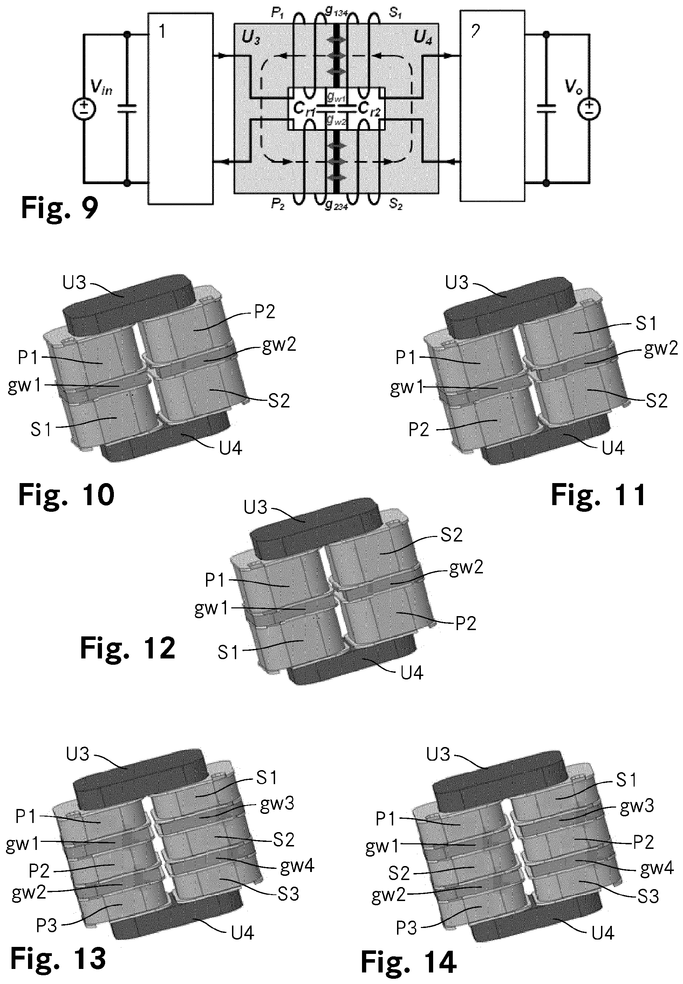

Fig. 9 shows an integrated magnetic component according to the second configuration not in accordance with the invention including two U cores with the windings wound on both legs of the U cores. This integrated magnetic component may be used for single phase, also designated as single rail bidirectional LLC resonant converters.

The U cores U3, U4 are stacked one on each other such that their legs are arranged in a row and face each other.

In order to reduce copper losses, the primary winding and the secondary winding may be divided into two or more sections and interleaved. In the example shown in fig. 9, the primary winding and the secondary winding are sectioned into two windings. Such winding sections are also designated as winding parts throughout the description.

A first primary winding P1 of the transformer is arranged on a first leg of the first U core U3 and a second primary winding P2 of the transformer is arranged on the second leg of the first U core U3. A first secondary winding S1 of the transformer is arranged on the first leg of the second U core U4 and a second secondary winding S2 of the transformer is arranged on the second leg of the second U core U4, where the first leg of the first U core U3 is arranged in a row with the first leg of the second U core U4 and the second leg of the first U core U3 is arranged in a row with the second leg of the second U core U4. Compared with the conventional magnetic component shown in fig. 1, not only the I cores have been removed but also the windings for the input and the output resonant choke have been removed.

Particularly, the first primary winding P1 and the first secondary winding S1 are arranged on the first legs of the U cores U3, U4 such as to result in a first winding air gap gw1 and the second primary winding P2 and the second secondary winding S2 are arranged on the second legs of the U cores U3, U4 such as to result in a second winding air gap gw2. The winding air gaps gw1, gw2 are filled with non permeable material. The length of the winding air gaps gw1, gw2, i.e. the distance between the primary and the secondary windings is indicated by some double arrows.

Air gaps $g_{134}$, $g_{234}$ are provided between the legs of the U cores U3, U4.

Fig. 10 shows the integrated magnetic component of fig. 9 in a perspective view wherein the primary windings P1, P2 are wound on the first U core U3 and the secondary windings S1, S2 are wound on the second U core U4.

Fig. 11 to 16 shown different variations of integrated magnetic components according to the second configuration of the invention in a perspective view that are based on the integrated magnetic component shown in fig. 9.

In the integrated magnetic components shown in fig. 11 and 12 the primary winding as well as the secondary winding are sectioned into two winding parts.

In the example shown in fig. 11, both primary windings P1, P2 are arranged on the first legs of the U cores U3, U4 with a first winding air gap gw1 inbetween and both secondary windings S1, S2 are arranged on the second legs of the U cores U3, U4 with a second winding air gap gw2 inbetween.

In the example shown in fig. 12, the first primary winding P1 is arranged on the first leg of the first U core U3 and the first secondary winding S1 is arranged on the first leg of the second U core U4 with a first winding air gap gw1 inbetween. And the second primary winding P2 is arranged on the second leg of the second U core U4 and the second secondary winding S2 is arranged on the first leg of the first U core U3 with a second winding air gap gw2 inbetween.

Dividing the primary winding and the secondary winding into two, three or more winding parts enables to achieve reasonable leakage inductances for the resonant series chokes.

Again, the windings air gaps gw1, gw2 are filled with non-permeable material.

In the integrated magnetic components shown in fig. 13 and 14, the primary winding as well as the secondary winding are sectioned into three winding parts.

In the example shown in fig. 13, all three primary windings P1, P2, P3 are arranged on the first legs of the U cores U3, U4 with a first winding air gap gw1 between the first primary winding P1 and the second primary winding P2 and a second winding air gap gw2 between the second primary winding P2 and the third primary winding P3. And all three secondary windings S1, S2, S3 are arranged on the second legs of the U cores U3, U4 with a third winding air gap gw3 between the first secondary winding S1 and the second secondary winding S2 and a fourth winding air gap gw4 between the second secondary winding S2 and the third secondary winding S3.

In the example shown in fig. 14, the first and the third primary windings P1, P3 as well as the second secondary winding S2 are arranged on the first legs of the U cores U3, U4 with a first winding air gap gw1 between the first primary winding P1 and the second secondary winding S2 and a second winding air gap gw2 between the second secondary S2 and the third primary winding P3. And the first and the third secondary windings S1, S3 as well as the second primary winding P2 are arranged on the second legs of the U cores U3, U4 with a third winding air gap gw3 between the first secondary winding S1 and the second primary winding P2 and a fourth winding air gap gw4 between the second primary winding P2 and the third secondary winding S3.

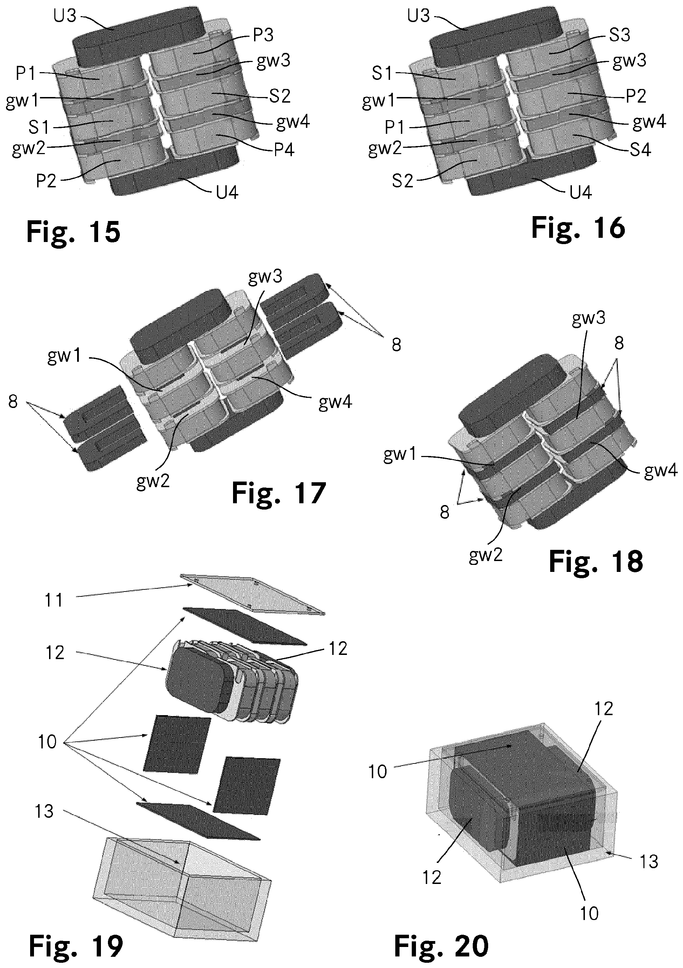

In the example shown in fig. 15, the primary winding is sectioned into four winding parts and the secondary winding is sectioned into two winding parts.

The first and the second primary windings P1, P2 as well as the first secondary winding S1 are arranged on the first legs of the U cores U3, U4 with a first winding air gap gw1 between the first primary winding P1 and the first secondary winding S1 and a second winding air gap gw2 between the first secondary winding S1 and the second primary winding P2. And the third and the fourth primary windings P3, P4 as well as the second secondary winding S2 are arranged on the second legs of the U cores U3, U4 with a third winding air gap gw3 between the third primary winding P3 and the second secondary winding S2 and a fourth winding air gap gw4 between the second secondary winding S2 and the fourth primary winding P4.

In the example shown in fig. 16, the primary winding is sectioned into two winding parts and the secondary winding is sectioned into four winding parts.

The first and the second secondary windings S1, S2 as well as the first primary winding P1 are arranged on the first legs of the U cores U3, U4 with a first winding air gap gw1 between the first secondary winding S1 and the first primary winding P1 and a second winding air gap gw2 between the first primary winding P1 and the second secondary winding S2. And the third and the fourth secondary windings S3, S4 as well as the second primary winding P2 are arranged on the second legs of the U cores U3, U4 with a third winding air gap gw3 between the third secondary winding S3 and the second primary winding P2 and a fourth winding air gap gw4 between the second primary winding P2 and the fourth secondary winding S4.

Again, the windings air gaps gw1, gw2, gw3, gw4 are filled with non-permeable materials.

Fig. 17 and 18 show an integrated magnetic component according to the second configuration not in accordance with the invention that is rather similar to the integrated magnetic components shown in one of figures 13 - 16, i. e. with a total of six primary and secondary windings provided on the legs of two U cores facing each other.

However, contrary to the components shown in fig. 13 - 16, the winding air gaps gw1, gw2, gw3, gw4 between the winding parts are not filled with a non-permeable material but they are filled with a filling element 8 made of a permeable material. The permeable material is preferably ferrite but, depending on the particular application, may also be another sufficiently permeable material such as for example iron powder.

Fig. 17 shows this component with the non-inserted filling elements 8 and fig. 18 shows the filling elements 8 inserted into the winding air gaps gw1, gw2, gw3, gw4.

The filling elements 8 made of a permeable material serve to increase the leakage inductance and to reduce the fringing field caused by the winding air gaps gw1, gw2, gw3, gw4.

Fig. 19 and 20 show the integrated magnetic component as shown in fig. 17 and 18 with shielding to contain the fringing fields induced by the windings air gaps.

Fig. 19 shows the integrated magnetic component in an explosive view and fig. 20 shows it in assembled form.

A plate 10 of permeable material is arranged on each lateral side of the integrated magnetic component, i. e. on those sides of it that are parallel to the legs of the core elements. The top side and the bottom side of the integrated magnetic component do not need any further shielding as they are formed by the yokes 12 of the choke cores.

The plates 10 are preferably made of ferrite but, depending on the particular application, may also be made of another sufficiently permeable material.

Fig. 19 and 20 also show a cavity 13, for example a cavity in the chassis of an electric vehicle that includes a bidirectional LLC resonant converter.

The integrated magnetic component including the plates 10 is then for example potted within that cavity 13 using a suitable potting material.

The plates 10 enable to keep the cavity small as they prevent the fringing fields from leaving the integrated magnetic component and entering the chassis.

And fig. 19 and 20 further show a base plate 11 that shields the integrated magnetic component from the printed circuit board (not shown) that carries further components and elements of the bidirectional LLC resonant converter, particularly from the copper provided in or on the printed circuit board.

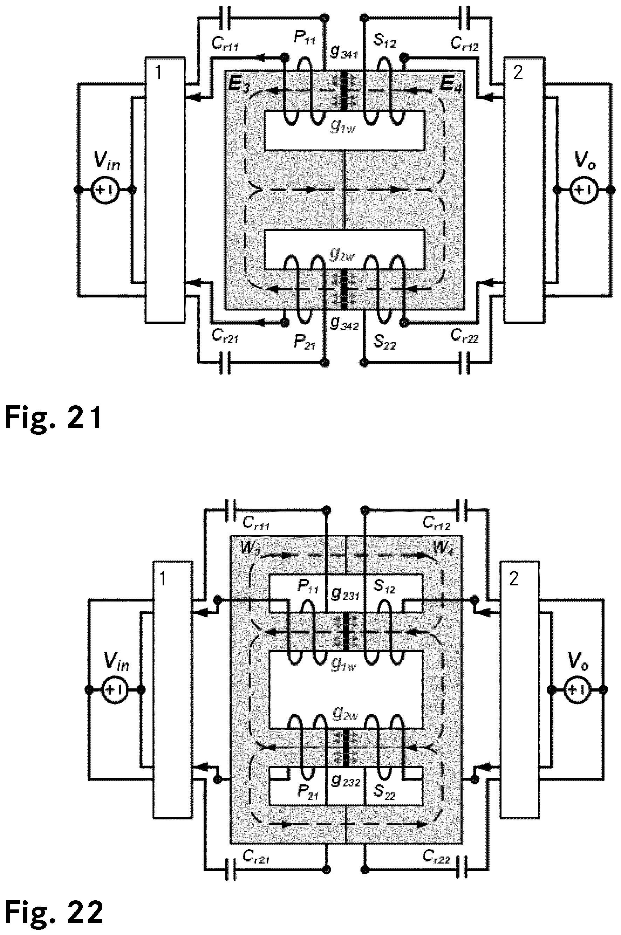

Fig. 21 shows an integrated magnetic component according to the second configuration not in accordance with the invention including two E cores with the windings wound on the two outer legs of the E cores. This integrated magnetic component with E cores may be used for two phase interleaved LLC converters.

The E cores E3, E4 are stacked one on each other such that their legs are arranged in a row and face each other.

A first primary winding P11 of the transformer is arranged on a first outer leg of the first E core E3 and a second primary winding P21 of the transformer is arranged on the second outer leg of the first E core E3. A first secondary winding S12 of the transformer is arranged on the first outer leg of the second E core E4 and a second secondary winding S22 of the transformer is arranged on the second outer leg of the second E core E4.

Compared with a corresponding conventional magnetic component, not only the I cores have been removed but also the windings for the input and the output resonant choke have been removed.

Particularly, the first primary winding P11 and the first secondary winding S12 are arranged on the first outer legs of the E cores E3, E4 such as to result in a first winding air gap g1w and the second primary winding P21 and the second secondary winding S22 are arranged on the second outer legs of the E cores E3, E4 such as to result in a second winding air gap g2w. These winding air gaps g1w, g2w increase the leakage inductance of the transformer and are used to form the input and output series resonant inductances. The length of the winding air gaps g1w, g2w, i. e. the distance between the primary and the secondary windings is indicated by some double arrows.

Air gaps $g_{341}$, $g_{342}$ are provided between the outer legs of the E cores E3, E4.

Fig. 22 shows an integrated magnetic component according to the second configuration not in accordance with the invention including two W cores with the windings wound on the two inner legs of the W cores. This integrated magnetic component may be used for two phase interleaved bidirectional LLC resonant converters.

The W cores W3, W4 are stacked one on each other such that their legs are arranged in a row and face each other.

A first primary winding P11 of the transformer is arranged on a first inner leg of the first W core W3 and a second primary winding P21 of the transformer is arranged on the second inner leg of the first W core W3. A first secondary winding S12 of the transformer is arranged on the first inner leg of the second W core W4 and a second secondary winding S22 of the transformer is arranged on the second inner leg of the second W core W4.

Again, compared with a corresponding conventional magnetic component, not only the I cores have been removed but also the windings for the input and the output resonant choke have been removed.

Particularly, the first primary winding P11 and the first secondary winding S12 are arranged on the first inner legs of the W cores W3, W4 such as to result in a first winding air gap g1w and the second primary winding P21 and the second secondary winding S22 are arranged on the second inner legs of the W cores W3, W4 such as to result in a second winding air gap g2w. These winding air gaps g1w, g2w increase the leakage inductance of the transformer and are used to form the input and output series resonant inductances.

The length of the winding air gaps g1w, g2w, i. e. the distance between the primary and the secondary windings is indicated by some double arrows.

Air gaps $g_{231}$, $g_{232}$ are provided between the outer legs of the W cores W3, W4.

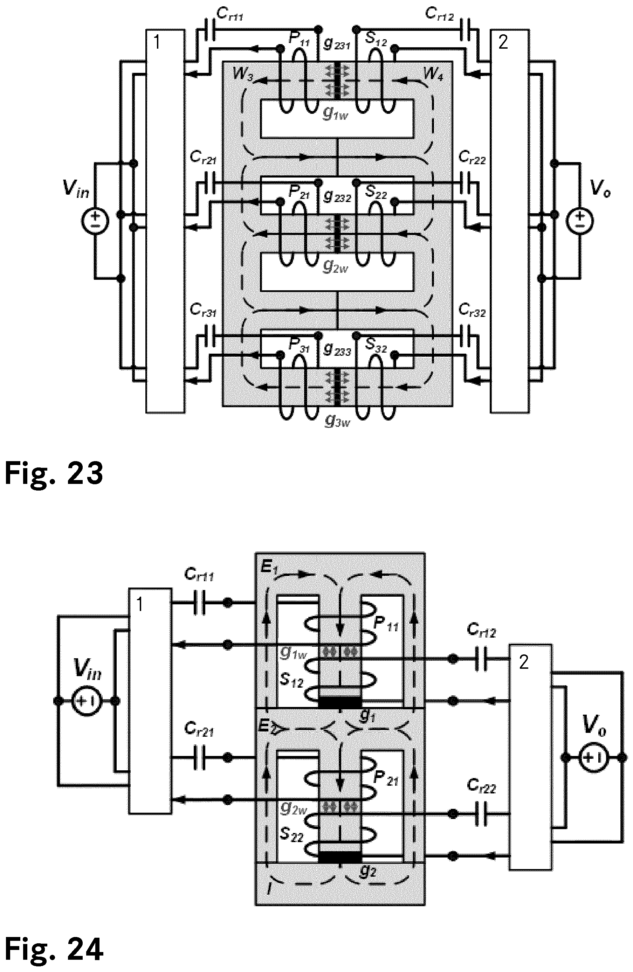

Fig. 23 shows an integrated magnetic component according to the second configuration not in accordance with the invention including two five-leg cores with the windings wound on the two outer legs and the centre leg of the five-leg cores. This integrated magnetic component may be used for three phase interleaved bidirectional LLC resonant converters.

The five-leg cores W3, W4 are stacked one on each other such that their legs are arranged in a row and face each other.

A first primary winding P11 of the transformer is arranged on a first outer leg of the first five-leg core W3, a second primary winding P21 of the transformer is arranged on the centre leg of the first five-leg core W3 and a third primary winding P31 of the transformer is arranged on the second outer leg of the first five-leg core W3. A first secondary winding S12 of the transformer is arranged on the first outer leg of the second five-leg core W4, a second secondary winding S22 of the transformer is arranged on the centre leg of the second five-leg core W4 and a third secondary winding S32 of the transformer is arranged on the second outer leg of the second five-leg core W4.

Again, compared with a corresponding conventional magnetic component, not only the I cores have been removed but also the windings for the input and the output resonant choke have been removed.

Particularly, the first primary winding P11 and the first secondary winding S12 are arranged on the first inner legs of the five-leg cores W3, W4 such as to result in a first winding air gap g1w, the second primary winding P21 and the second secondary winding S22 are arranged on the centre legs of the five-leg cores W3, W4 such as to result in a second winding air gap g2w and the third primary winding P31 and the third secondary winding S32 are arranged on the second outer legs of the five-leg cores W3, W4 such as to result in a third winding air gap g3w. These winding air gaps g1w, g2w, g3w increase the leakage inductance of the transformer and are used to form the input and output series resonant inductances.

The length of the winding air gaps g1w, g2w and g3w, i. e. the distance between the primary and the secondary windings is indicated by some double arrows.

Air gaps $g_{231}$, $g_{232}$, $g_{233}$ are provided between the two outer legs and the centre leg of the five-leg cores W3, W4.

Fig. 24 shows an integrated magnetic component according to the second configuration not in accordance with the invention including two E cores and an I core with the windings wound on the inner legs of the E cores. This integrated magnetic component may be used for two interleaved converters.

The E cores E1, E2 are stacked one on each other such that their legs are arranged in a row and such that the legs of the first E core E1 face the yoke of the second E core E2. The I core I is arranged to close the magnetic circuits of the second E core E2. The I core I may also be implemented as an E core.

A first primary winding P11 of the transformer is arranged on the centre leg of the first E core E1 and a second primary winding P21 of the transformer is arranged on the centre leg of the second E core E2. A first secondary winding S12 of the transformer is also arranged on the first centre leg of the first E core E1 and a second secondary winding S22 of the transformer is also arranged on the centre leg of the second E core E2.

The first primary winding P11 and the first secondary winding S12 are arranged on the centre leg of the first E core E1 such as to result in a first winding air gap g1w and the second primary winding P21 and the second secondary winding S22 are arranged on the centre leg of the second E core E2 such as to result in a second winding air gap g2w. These winding air gaps g1w, g2w increase the leakage inductance of the transformer and are used to form the input and output series resonant inductances.

The length of the winding air gaps g1w, g2w, i. e. the distance between the primary and the secondary windings is indicated by some double arrows.

Air gaps $g_1$, $g_2$ are provided between the centre leg of the first E core E1 and the yoke of the second E core E2 and between the centre leg of the second E core E2 and the I core I. The two E cores E1, E2 and the I core I may also be assembled in a different way to achieve the same embodiment. For example, the I core I may be stacked between the two E cores E1, E2 such that the legs of both E cores E1, E2 face the I core I.

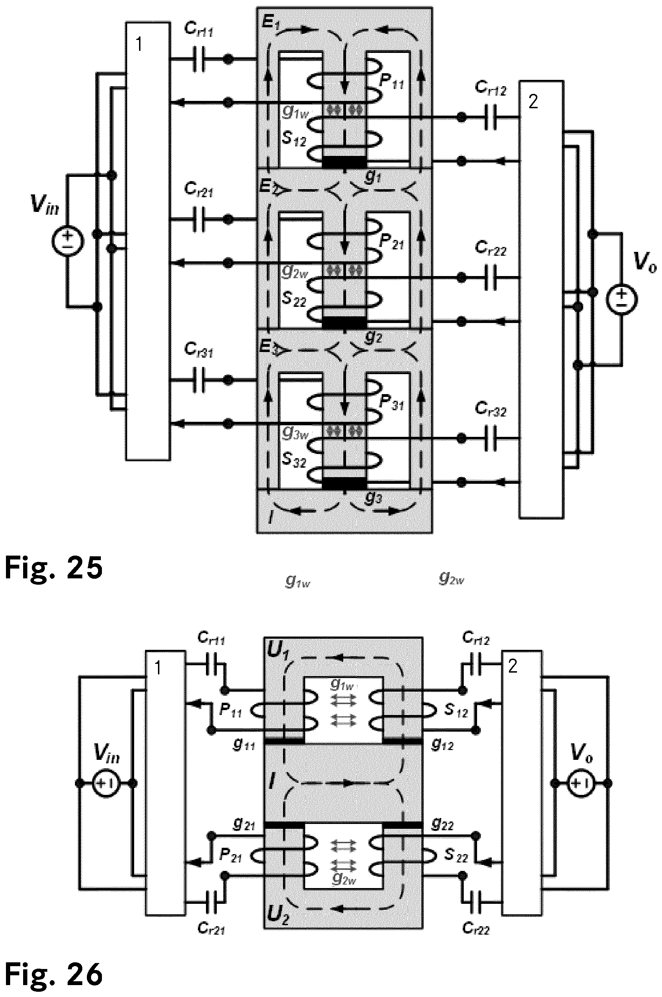

Fig. 25 shows an integrated magnetic component according to the second configuration not in accordance with the invention including three E cores and an I core with the windings wound on the inner legs of the E cores. This integrated magnetic component may be used for three phase interleaved bidirectional LLC resonant converters.

The E cores E1, E2, E3 are stacked one on each other such that their legs are arranged in a row and such that the legs of the first E core E1 face the yoke of the second E core E2 and the legs of the second E core E2 face the yoke of the third E core E3. The I core I is arranged to close the magnetic circuits of the third E core E3.

A first primary winding P11 of the transformer is arranged on the centre leg of the first E core E1, a second primary winding P21 of the transformer is arranged on the centre leg of the second E core E2 and a third primary winding P31 of the transformer is arranged on the centre leg of the third E core E3. A first secondary winding S12 of the transformer is also arranged on the first centre leg of the first E core E1, a second secondary winding S22 of the transformer is also arranged on the centre leg of the second E core E2 and a third secondary winding S32 of the transformer is also arranged on the centre leg of the third E core E3.

The first primary winding P11 and the first secondary winding S12 are arranged on the centre leg of the first E core E1 such as to result in a first winding air gap g1w, the second primary winding P21 and the second secondary winding S22 are arranged on the centre leg of the second E core E2 such as to result in a second winding air gap g2w and the third primary winding P31 and the third secondary winding S32 are arranged on the centre leg of the third E core E3 such as to result in a third winding air gap g3w. These winding air gaps g1w, g2w, g3w increase the leakage inductance of the transformer and are used to form the input and output series resonant inductances.

The length of the winding air gaps g1w, g2w, g3w, i. e. the distance between the primary and the secondary windings is indicated by some double arrows.

Air gaps $g_1$, $g_2$, $g_3$ are provided between the centre leg of the first E core E1 and the yoke of the second E core E2, between the centre leg of the second E core E2 and the centre leg of the third E core E3 and between the centre leg of the third E core E3 and the I core I.

The three E cores E1, E2, E3 and the I core I may also be assembled in a different way to achieve the same embodiment. For example, the I core I may be stacked between the first and the second E cores E1, E2 such that the legs of both E cores E1, E2 face the I core I and the legs of the third E core E3 face the yoke of the first or the second E core E1, E2.

And as described in connection with fig. 24, an additional E core may be used instead of the I core to close the magnetic circuits of the third E core E3. In this case, the legs of the third E core E3 and this additional E core are usually shortened to achieve the same behaviour of the component. In such an embodiment with four E cores it is of course also possible that two other E cores are arranged such that their legs face each other and are shortened where the two other E cores are arranged such that their legs face the yokes of these two E cores.

Fig. 26 shows an integrated magnetic component according to the second configuration not in accordance with the invention including two U cores and an I core with the windings wound on both legs of the U cores. This integrated magnetic component with U cores may be used for two phase interleaved LLC converters.

The U cores U1, U2 are stacked one on each other such that their legs are arranged in a row and the I core I is stacked between the two U cores U1, U2 such that the legs of both U cores U1, U2 face the I core I.

A first primary winding P11 of the transformer is arranged on the first leg of the first U core U1 and a second primary winding P21 of the transformer is arranged on the first leg of the second U core U2. A first secondary winding S12 of the transformer is arranged on the second leg of the first U core U1 and a second secondary winding S22 of the transformer is arranged on the second leg of the second U core U2.

The first primary winding P11 and the first secondary winding S12 are arranged on the legs of the first U core U1 such as to result in a first winding air gap g1w and the second primary winding P21 and the second secondary winding S22 are arranged on the legs of the second U core U2 such as to result in a second winding air gap g2w. These winding air gaps g1w, g2w increase the leakage inductance of the transformer and are used to form the input and output series resonant inductances.

The length of the winding air gaps g1w, g2w, i. e. the distance between the primary and the secondary windings is indicated by some double arrows.

Air gaps $g_{11}$, $g_{21}$, $g_{12}$, $g_{22}$ are provided between the centre legs of the first and the second U core U1, U2 and the I core I.

The two U cores U1, U2 and the I core I may also be assembled in a different way to achieve the same embodiment. For example, the second U core U2 may be stacked between the two first U core U1 and the I core I such that the legs of the first U core U1 face the yoke of the second U core U2 and the legs of the second U core U2 face the I core I such that the I core closes the magnetic circuits of the second U core U2.

In another variant of this embodiment, an additional U core is used instead of the I core to close the magnetic circuit of the first U core U1. In this case, the legs of the first U core U1 and the additional U core are usually shorter than the legs of the second U core U2 to achieve the same behaviour of the component. It is of course also possible that the first and the second U cores U1, U2 are arranged such that their legs face each other and are shortened and wherein the third U core is arranged such that its legs face the yoke of the first or the second U core.

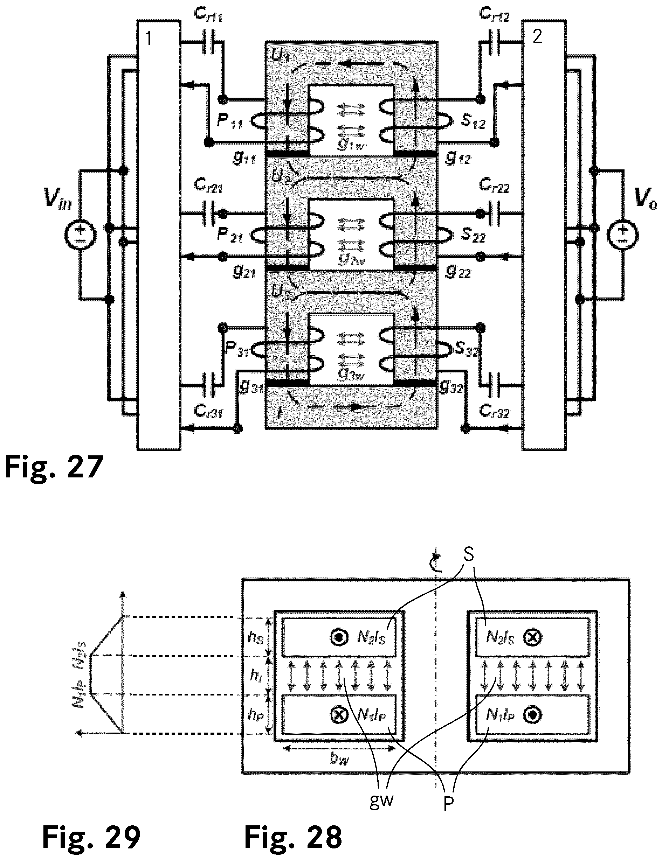

Fig. 27 shows an integrated magnetic component according to the second configuration not in accordance with the invention including three U cores and an I core with the windings wound on both legs of the U cores U1, U2, U3. This integrated magnetic component may be used for three phase interleaved bidirectional LLC resonant converters.

The U cores U1, U2, U3 are stacked one on each other such that their legs are arranged in a row and such that the legs of the first U core U1 face the yoke of the second U core U2, the legs of the second U core U2 face the yoke of the third U core U3 and the legs of the third U core U3 face the I core which therefore closes the magnetic circuits of the third U core U3.

A first primary winding P11 of the transformer is arranged on the first leg of the first U core U1, a second primary winding P21 of the transformer is arranged on the first leg of the second U core U2 and a third primary winding P31 of the transformer is arranged on the first leg of the third U core U3. A first secondary winding S12 of the transformer is arranged on the second leg of the first U core U1, a second secondary winding S22 of the transformer is arranged on the second leg of the second U core U2 and a third secondary winding S32 of the transformer is arranged on the second leg of the third U core U3.

The first primary winding P11 and the first secondary winding S12 are arranged on the first U core U1 such as to result in a first winding air gap g1w, the second primary winding P21 and the second secondary winding S22 are arranged on the second U core U2 such as to result in a second winding air gap g2w and the third primary winding P31 and the third secondary winding S32 are arranged on the third U core U3 such as to result in a third winding air gap g3w. These winding air gaps g1w, g2w, g3w increase the leakage inductance of the transformer and are used to form the input and output series resonant inductances.

The length of the winding air gaps g1w, g2w, g3w, i. e. the distance between the primary and the secondary windings is indicated by some double arrows.

Air gaps $g_{11}$, $g_{12}$, $g_{21}$, $g_{22}$, $g_{31}$, $g_{32}$ are provided between the legs of the first U core U1 and the yoke of the second U core U2, between the legs of the second U core U2 and the yoke of the third U core U3 and between the legs of the third U core U3 and the I core I.

The three U cores U1, U2, U3 and the I core I may also be assembled in a different way to achieve the same embodiment. For example, the I core I may be stacked between the first and the second U cores U1, U2 such that the legs of both U cores U1, U2 face the I core I and the legs of the third U core U3 face the yoke of the first or the second U core U1, U2.

In another variant of this embodiment, an additional U core is used instead of the I core to close the magnetic circuit of the third U core U3. In this case, the legs of the third U core U3 and the additional U core are usually shorter than the legs of the other U cores to achieve the same behaviour of the component. It is of course also possible that the first and the second U cores U1, U2 are arranged such that their legs face each other and are shortened and wherein the third U core is arranged such that its legs face the yoke of the first or the second U core and wherein the additional U core is arranged such that its legs face the yoke of the third U core.

Fig. 28 shows a cross section of an integrated magnetic component according to the second configuration not in accordance with the invention.

The integrated magnetic component includes a primary winding P having a width $b_w$, a height $h_P$ and a number of turns $N_1$. A current $I_P$ flows in the primary winding P. The integrated magnetic component further includes a secondary winding S having the same width $b_w$, a height $h_S$ and a number of turns $N_2$. A current $I_S$ flows in the secondary winding P. The primary winding P and the secondary winding S are arranged with a winding air gap gw therebetween having a height $h_I$.

Then, the leakage inductance $L_{IP}$ at the primary is calculated with the following formula

$$L_{IP} \approx \frac{\mu_0}{b_W \cdot I_p^{\ 2}} \cdot \left( \sum_k S_k \cdot I_{rms,k}^{\ 2} \right) \approx \frac{\mu_0 \cdot N_1^{\ 2}}{b_W} \left( \frac{h_P \cdot MLT_P + 3 \cdot h_I \cdot MLT_I + h_S \cdot MLT_S}{3} \right),$$

where $S_k$ is the surface of the k-th winding or air gap, $I_{RMS,k}$ its RMS current value, $MLT_P$ is the mean length turn of the primary winding, $MLT_I$ is the mean length turn of the winding air gap gw, $MLT_S$ is the mean length turn of the secondary winding and $\mu_0$ is air permeability.

The separation between the primary and the secondary winding in order to achieve the required leakage inductance vary from about 0.5mm to about 10mm depending on the shape and the size of the ferrite core used.

Fig. 29 shows the MMF (magneto motive force) curve for the magnetic component of fig. 28. The MMF curve starts at zero at the beginning of the primary winding P, rises to its maximum $N_1 I_P$ or $N_2 I_S$ at the full height of the primary winding P, remains at this level across the winding air gap, stats to fall at the beginning of the secondary winding S and then falls to zero until the end of the secondary winding S.

It should be understood that the detailed description provided, while indicating the preferred embodiment of the invention, are intended for purposes of illustrations only and are not intended to limit the scope of the invention which is defined in the appended claims.

In summary, it is to be noted that the invention enables to provide small and compact magnetic components for bidirectional LLC resonant converters, which results in a high power density. At the same time, the invention allows to reduce losses and therefore to increase efficiency of the devices.

**Claims**

**1.** Integrated magnetic component (E1-E4, U1-U4, W1-W4, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$, Lr1, Lr2, Lr11, Lr12, Lr21, Lr22, Lr31, Lr32, $g_1$, $g_2$, $g_{11}$, $g_{12}$, $g_{21}$, $g_{22}$, $g_{31}$, $g_{32}$) for a bidirectional LLC resonant converter with an input converter (1), an output converter (2), a transformer (E3, E4, U3, U4, W3, W4, P1, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$), a first series resonant inductance on a primary side of the transformer and a second series resonant inductance on a secondary side of the transformer, the integrated magnetic component comprising a first magnetic core element (E3, U3, W3) and a second magnetic core element (E4, U4, W4), wherein each of the first and the second magnetic core elements (E3, E4, U3, U4, W3, W4) includes a yoke and at least two legs, wherein

a) the first and the second magnetic core elements (E3, E4, U3, U4, W3, W4) are stacked one on another such that their legs are arranged in a row and face each other,
b) a first primary winding part (P1, P11) of the transformer is arranged on a first primary winding leg of one of the first or the second magnetic core elements (E3, E4, U3, U4, W3, W4), a first secondary winding part (S1, S12) of the transformer is arranged on a first secondary winding leg of one of the first or the second magnetic core elements (E3, E4, U3, U4, W3, W4), wherein the first primary winding leg and the first secondary winding leg encompass the same magnetic flux (3),

c) wherein the integrated magnetic component further comprises a third magnetic core element (E1, U1, W1) and a fourth magnetic core element (E2, U2, W2) wherein each of the third and fourth magnetic core elements (E1, U1, W1, E2, U2, W2) includes a yoke and at least two legs and **characterised in that** the third magnetic core element (E1, U1, W1) is stacked to the first magnetic core element (E3, U3, W3), a first series resonant winding part (Lr1, Lr11) of the first series resonant inductance is arranged on a first series resonant winding leg of the third magnetic core element (E1, U1, W1) and is connected in series with the first primary winding part (P1, P11), wherein the first series resonant winding leg and the first primary winding leg are arranged in a row and encompass the same magnetic flux (3) and wherein a first air gap ($g_1$, $g_{11}$) is provided between first series resonant winding leg and the first magnetic core element (E3, U3, W3), and

d) the fourth magnetic core element (E2, U2, W2) is stacked to the second magnetic core element (E4, U4, W4), such that the legs of the fourth magnetic core element (E2, U2, W2) face the yoke of the second magnetic core element (E4, U4, W4), a first series resonant winding part (Lr2, Lr12) of the second series resonant inductance is arranged on a first series resonant winding leg of the fourth magnetic core element (E2, U2, W2) and is connected in series with the first secondary winding part (S1, S12), wherein the first series resonant winding leg of the fourth magnetic core element (E2, U2, W2) and the first secondary winding leg of the second magnetic core element (E4, U4, W4) are arranged in a row and encompass the same magnetic flux (3) and wherein a second air gap ($g_2$, $g_{12}$) is provided between the first series resonant winding leg and the second magnetic core element (E4, U4, W4),

and wherein the first primary winding part (P1, P11), the first secondary winding part (S1, S12), the first series resonant winding part (Lr1, Lr11) of the first series resonant inductance and the first series resonant winding part (Lr2, Lr12) of the second series resonant inductance are adapted such that a resulting magnetic flux (3) of these winding parts within the yoke of the first magnetic core element (E3, U3, W3) at least partially compensate each other and such that a resulting magnetic flux (3) of these winding parts within the yoke of the second magnetic core element (E4, U4, W4) at least partially compensate each other.

2. Integrated magnetic component according to claim 1, wherein a second primary winding part (P21, P2) of the transformer is arranged on a second primary winding leg of one of the first or the second magnetic core elements (E3, E4, U3, U4, W3, W4), a second secondary winding part (S22, S2) of the transformer is arranged on a second secondary winding leg of one of the first or the second magnetic core elements (E3, E4, U3, U4, W3, W4), wherein the second primary winding leg and the second secondary winding leg encompass the same magnetic flux (3).

3. Integrated magnetic component according to claim 1 and 2, wherein the first primary winding part (P1, P11) and the first secondary winding part (S1, S12) are provided at a first distance from each other to provide a first winding air gap between them and wherein the second primary winding part (P2, P21) and the second secondary winding part (S2, S22) are provided at a second distance from each other to provide a second winding air gap between them, whereby a first leakage inductance generated by said first winding air gap and a second leakage inductance generated by said second winding air gap are comprised by the first series resonant inductance and the second series resonant inductance.

4. Integrated magnetic component according to claim 1 or 2, wherein each magnetic core element (U1, U2, U3, U4) is a U core element, wherein

a) a second series resonant winding part (Lr21) of the first series resonant inductance is arranged on a second series resonant winding leg of the third magnetic core element (U1) and is connected in series with the second primary winding part (P2), wherein the second series resonant winding leg of the third magnetic core element (U1) and the second primary winding leg are arranged in a row and encompass the same magnetic flux (3) and wherein a third air gap ($g_{21}$) is provided between the second series winding leg of the third magnetic core element (U1) and the first magnetic core element (U3), a second series resonant winding part (Lr22) of the second series resonant inductance is arranged on a second series resonant winding leg of the fourth magnetic core element (U2) and is connected in series with the second secondary winding part (S2), wherein the second series resonant winding leg of the fourth magnetic core element (U2) and the secondary winding leg are arranged in a row and encompass the same magnetic flux (3) and wherein a fourth air gap ($g_{22}$) is provided between the second series resonant winding leg of the fourth magnetic core element (U2) and the second magnetic core element (U4), and

b) the first and the second primary winding part (P1, P2), the first and the second secondary winding part (S1, S2), the first and the second series resonant winding part (Lr11, Lr21) of the first series resonant inductance and the first and the second series resonant winding part (Lr12, Lr22) of the second series resonant inductance are adapted such that a resulting magnetic flux (3) of these winding parts within the yoke of the first magnetic core element (U3) at least partially compensate each other and such that a resulting magnetic flux (3) of these winding parts within the yoke of the second magnetic core element (U4) at least partially compensate each other.

5. Integrated magnetic component according to claim 3, wherein each magnetic core element (U1, U2, U3, U4) is a U core element.

6. Integrated magnetic component according to any one of claims 1 - 3, wherein each magnetic core element (E1, E2, E3, E4) is an E core element and wherein each primary winding leg and each secondary winding leg is an outer leg.

7. Integrated magnetic component according to claim 1 or 2, wherein each magnetic core element (E1, E2, E3, E4) is an E core element and wherein each primary winding leg and each secondary winding leg is an inner leg.

8. Integrated magnetic component according to any one of claims 1 - 3, wherein each magnetic core element (W1, W2, W3, W4) is a W core element with a yoke and four legs, and wherein each primary winding leg and each secondary winding leg is an inner leg.

9. Integrated magnetic component according to any one of claims 1 - 3, wherein each magnetic core element (W1, W2, W3, W4) is a five-leg core element with a yoke and five legs, wherein a third primary winding part (P31) of the transformer is arranged on a third primary winding leg of one of the first or the second magnetic core elements (W3, W4), a third secondary winding part (S32) of the transformer is arranged on a third secondary winding leg of one of the first or the second magnetic core elements (W3, W4), wherein the third primary winding leg and the third secondary winding leg are arranged in a row and encompass the same magnetic flux (3).

10. Integrated magnetic component according to claim 9, wherein the first and the third primary winding leg and the first and the third secondary winding leg is an outer leg and wherein the second primary winding leg and the second secondary winding leg is a centre leg.

11. Integrated magnetic component according to claim 9, wherein the first, the second and the third primary winding leg and the first, the second and the third secondary winding leg is an inner leg.

12. Integrated magnetic component according to claim 3, wherein a filling element made of permeable material is provided within at least one, preferably all, of the winding air gaps to increase the leakage inductance and reduce fringing fields caused by the windings air gaps, wherein the permeable material preferably is ferrite.

13. Integrated magnetic component according to claim 3, wherein a plate made of permeable material is provided on each surface of the integrated magnetic component that is arranged in parallel to the legs of the magnetic core elements to contain fringing fields caused by the windings air gaps.

14. A bidirectional LLC resonant converter including an input converter (1), an output converter (2), a transformer (E3, E4, U3, U4, W3, W4, P1, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$), a series resonant inductance on a primary side of the transformer, a series resonant inductance on a secondary side of the transformer and an integrated magnetic component according to any one of the preceding claims.

15. A bidirectional LLC resonant converter according to claim 14, further including two resonant capacitors (Cr1, Cr2).

16. An electric vehicle including an integrated magnetic component according to any one of claims 1 - 13, wherein the electric vehicle preferably includes a chassis having a cavity, wherein the integrated magnetic component is potted within the cavity.

**Patentansprüche**

1. Integrierte magnetische Komponente (E1-E4, U1-U4, W1-W4, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$, Lr1, Lr2, Lr11, Lr12, Lr21, Lr22, Lr31, Lr32, $g_1$, $g_2$, $g_{11}$, $g_{12}$, $g_{21}$, $g_{22}$, $g_{31}$, $g_{32}$) für einen bidirektionalen LLC-Resonanzumrichter mit einem Eingangsumrichter (1), einem Ausgangsumrichter (2), einem Transformator (E3, E4, U3, U4, W3, W4, P1, P2, P11, P21, P31, S1, S2, S12, S22, S32, $g_{34}$, $g_{341}$, $g_{342}$, $g_{134}$, $g_{234}$, $g_{231}$,

$g_{232}$, $g_{233}$), einer ersten Reihenresonanzinduktivität auf einer Primärseite des Transformators und einer zweiten Reihenresonanzinduktivität auf einer Sekundärseite des Transformators, wobei die integrierte magnetische Komponente ein erstes Magnetkernelement (E3, U3, W3) und ein zweites Magnetkernelement (E4, U4, W4) umfasst, wobei jedes der ersten und zweiten Magnetkernelemente (E3, E4, U3, U4, W3, W4) ein Joch und mindestens zwei Schenkel umfasst, wobei

a) das erste und das zweite Magnetkernelement (E3, E4, U3, U4, W3, W4) so übereinander gestapelt sind, dass ihre Schenkel in einer Reihe angeordnet und einander zugewandt sind,

b) ein erster Primärwicklungsteil (P1, P11) des Transformators auf einem ersten Primärwicklungsschenkel eines der ersten oder zweiten Magnetkernelemente (E3, E4, U3, U4, W3, W4) angeordnet ist, ein erster Sekundärwicklungsteil (S1, S12) des Transformators auf einem ersten Sekundärwicklungsschenkel eines der ersten oder der zweiten Magnetkernelemente (E3, E4, U3, U4, W3, W4) angeordnet ist, wobei der erste Primärwicklungsschenkel und der erste Sekundärwicklungsschenkel denselben magnetischen Fluss (3) umfassen,

c) wobei die integrierte magnetische Komponente ferner ein drittes Magnetkernelement (E1, U1, W1) und ein viertes Magnetkernelement (E2, U2, W2) umfasst, wobei jedes der dritten und vierten Magnetkernelemente (E1, U1, W1, E2, U2, W2) ein Joch und mindestens zwei Schenkel umfasst, und **dadurch gekennzeichnet, dass** das dritte Magnetkernelement (E1, U1, W1) mit dem ersten Magnetkernelement (E3, U3, W3) gestapelt ist, ein erster Reihenresonanzwicklungsteil (Lr1, Lr11) der ersten Reihenresonanzinduktivität auf einem ersten Reihenresonanzwicklungsschenkel des dritten Magnetkernelements (E1, U1, W1) angeordnet und mit dem ersten Primärwicklungsteil (P1, P11) in Reihe geschaltet ist, wobei der erste Reihenresonanzwicklungsschenkel und der erste Primärwicklungsschenkel in einer Reihe angeordnet sind und den gleichen magnetischen Fluss (3) umfassen und wobei zwischen erstem Reihenresonanzwicklungsschenkel und dem ersten Magnetkernelement (E3, U3, W3) ein erster Luftspalt (g1, g11) vorgesehen ist, und

d) das vierte Magnetkernelement (E2, U2, W2) auf das zweite Magnetkernelement (E4, U4, W4) gestapelt ist, so dass die Schenkel des vierten Magnetkernelements (E2, U2, W2) dem Joch des zweiten Magnetkernelements (E4, U4, W4) zugewandt sind, ein erster Reihenresonanzwicklungsteil (Lr2, Lr12) der zweiten Reihenresonanzinduktivität auf einem ersten Reihenresonanzwicklungsschenkel des vierten Magnetkernelements (E2, U2, W2) angeordnet und mit dem ersten Sekundärwicklungsteil (S1, S12) in Reihe geschaltet ist, wobei der erste Reihenresonanzwicklungsschenkel des vierten Magnetkernelements (E2, U2, W2) und der erste Sekundärwicklungsteil (S1, S12) in Reihe geschaltet ist, angeordnet und mit dem ersten Sekundärwicklungsteil (S1, S12) in Reihe geschaltet ist, wobei der erste Reihenresonanzwicklungsschenkel des vierten Magnetkernelements (E2, U2, W2) und der erste Sekundärwicklungsschenkel des zweiten Magnetkernelements (E4, U4, W4) in einer Reihe angeordnet sind und denselben magnetischen Fluss (3) umfassen und wobei zwischen dem ersten Reihenresonanzwicklungsschenkel und dem zweiten Magnetkernelement (E4, U4, W4) ein zweiter Luftspalt ($g_2$, $g_{12}$) vorgesehen ist,

und wobei der erste Primärwicklungsteil (P1, P11), der erste Sekundärwicklungsteil (S1, S12), der erste Reihenresonanzwicklungsteil (Lr1, Lr11) der ersten Reihenresonanzinduktivität und der erste Reihenresonanzwicklungsteil (Lr2, Lr1, Lr11) der ersten Reihenresonanzinduktivität und der erste Reihenresonanzwicklungsteil (Lr2, Lr12) der zweiten Reihenresonanzinduktivität so ausgebildet sind, dass ein resultierender magnetischer Fluss (3) dieser Wicklungsteile innerhalb des Jochs des ersten Magnetkernelements (E3, U3, W3) sich zumindest teilweise kompensiert und dass ein resultierender magnetischer Fluss (3) dieser Wicklungsteile innerhalb des Jochs des zweiten Magnetkernelements (E4, U4, W4) sich zumindest teilweise kompensiert.

2. Integrierte magnetische Komponente nach Anspruch 1, wobei ein zweiter Primärwicklungsteil (P21, P2) des Transformators auf einem zweiten Primärwicklungsschenkel eines der ersten oder zweiten Magnetkernelemente (E3, E4, U3, U4, W3, W4) angeordnet ist, ein zweiter Sekundärwicklungsteil (S22, S2) des Transformators auf einem zweiten Sekundärwicklungsschenkel eines der ersten oder der zweiten Magnetkernelemente (E3, E4, U3, U4, W3, W4) angeordnet ist, wobei der zweite Primärwicklungsschenkel und der zweite Sekundärwicklungsschenkel denselben magnetischen Fluss (3) umfassen.

3. Integrierte magnetische Komponente nach Anspruch 1 und 2, wobei der erste Primärwicklungsteil (P1, P11) und der erste Sekundärwicklungsteil (S1, S12) in einem ersten Abstand voneinander vorgesehen sind, um einen ersten Wicklungsluftspalt zwischen ihnen bereitzustellen, und wobei der zweite Primärwicklungsteil (P2, P21) und der zweite Sekundärwicklungsteil (S2, S22) in einem zweiten Abstand voneinander vorgesehen sind, um einen zweiten Wicklungsluftspalt zwischen ihnen bereitzustellen, wodurch eine erste Streuinduktivität, die durch den ersten Wicklungsluftspalt erzeugt wird, und eine zweite Streuinduktivität, die durch den zweiten Wicklungsluftspalt erzeugt wird, von der ersten Reihenresonanzinduktivität und der zweiten Reihenresonanzinduktivität aufgewiesen werden.

4. Integrierte magnetische Komponente nach Anspruch 1 oder 2, wobei jedes Magnetkernelement (U1, U2, U3, U4) ein U-I<ernelement ist, wobei

a) ein zweiter Reihenresonanzwicklungsteil (Lr21) der ersten Reihenresonanzinduktivität auf einem zweiten Reihenresonanzwicklungsschenkel des dritten Magnetkernelements (U1) angeordnet ist und mit dem zweiten Primärwicklungsteil (P2) in Reihe geschaltet ist, wobei der zweite Reihenresonanzwicklungsschenkel des dritten Magnetkernelements (U1) und der zweite Primärwicklungsschenkel in einer Reihe angeordnet sind und denselben magnetischen Fluss (3) umfassen und wobei ein dritter Luftspalt ($g_{21}$) zwischen dem zweiten Reihenwicklungsschenkel des dritten Magnetkernelements (U1) und dem ersten Magnetkernelement (U3) vorgesehen ist, ein zweiter Reihenresonanzwicklungsteil (Lr22) der zweiten Reihenresonanzinduktivität auf einem zweiten Reihenresonanzwicklungsschenkel des vierten Magnetkernelements (U2) angeordnet und mit dem zweiten Sekundärwicklungsteil (S2) in Reihe geschaltet ist, wobei der zweite Reihenresonanzwicklungsschenkel des vierten Magnetkernelements (U2) und der Sekundärwicklungsschenkel in einer Reihe angeordnet sind und denselben magnetischen Fluss (3) umfassen und wobei ein vierter Luftspalt ($g_{22}$) zwischen dem zweiten Reihenresonanzwicklungsschenkel des vierten Magnetkernelements (U2) und dem zweiten Magnetkernelement (U4) vorgesehen ist, und

b) der erste und der zweite Primärwicklungsteil (P1, P2), der erste und der zweite Sekundärwicklungsteil (S1, S2), der erste und der zweite Reihenresonanzwicklungsteil (Lr11, Lr21) der ersten Reihenresonanzinduktivität und der erste und der zweite Reihenresonanzwicklungsteil (Lr12, Lr22) der zweiten Reihenresonanzinduktivität so ausgebildet sind, dass ein resultierender magnetischer Fluss (3) dieser Wicklungsteile innerhalb des Jochs des ersten Magnetkernelements (U3) einander zumindest teilweise kompensiert und dass ein resultierender magnetischer Fluss (3) dieser Wicklungsteile innerhalb des Jochs des zweiten Magnetkernelements (U4) einander zumindest teilweise kompensiert.

5. Integrierte magnetische Komponente nach Anspruch 3, wobei jedes Magnetkernelement (U1, U2, U3, U4) ein U-I<ernelement ist.

6. Integrierte magnetische Komponente nach einem der Ansprüche 1 bis 3, wobei jedes Magnetkernelement (E1, E2, E3, E4) ein E-I<ernelement ist und wobei jeder Primärwicklungsschenkel und jeder Sekundärwicklungsschenkel ein Außenschenkel ist.

7. Integrierte magnetische Komponente nach einem der Ansprüche 1 oder 2, wobei jedes Magnetkernelement (E1, E2, E3, E4) ein E-I<ernelement ist und wobei jeder Primärwicklungsschenkel und jeder Sekundärwicklungsschenkel ein Innenschenkel ist.

8. Integrierte magnetische Komponente nach einem der Ansprüche 1 bis 3, wobei jedes Magnetkernelement (W1, W2, W3, W4) ein W-I<ernelement mit einem Joch und vier Schenkeln ist und wobei jeder Primärwicklungsschenkel und jeder Sekundärwicklungsschenkel ein Innenschenkel ist.

9. Integrierte magnetische Komponente nach einem der Ansprüche 1 bis 3, wobei jedes Magnetkernelement (W1, W2, W3, W4) ein fünfschenkliges Kernelement mit einem Joch und fünf Schenkeln ist, wobei ein dritter Primärwicklungsteil (P31) des Transformators auf einem dritten Primärwicklungsschenkel eines der ersten oder zweiten Magnetkernelemente (W3, W4) angeordnet ist, ein dritter Sekundärwicklungsteil (S32) des Transformators auf einem dritten Sekundärwicklungsschenkel eines der ersten oder der zweiten Magnetkernelemente (W3, W4) angeordnet ist, wobei der dritte Primärwicklungsschenkel und der dritte Sekundärwicklungsschenkel in einer Reihe angeordnet sind und denselben magnetischen Fluss (3) umfassen.

10. Integrierte magnetische Komponente nach Anspruch 9, wobei der erste und der dritte Primärwicklungsschenkel und der erste und der dritte Sekundärwicklungsschenkel ein Außenschenkel sind und wobei der zweite Primärwicklungsschenkel und der zweite Sekundärwicklungsschenkel ein Mittelschenkel sind.

11. Integrierte magnetische Komponente nach Anspruch 9, wobei der erste, der zweite und der dritte Primärwicklungsschenkel und der erste, der zweite und der dritte Sekundärwicklungsschenkel ein Innenschenkel sind.

12. Integrierte magnetische Komponente nach Anspruch 3, wobei ein Füllelement aus permeablem Material in mindestens einem, vorzugsweise allen, der Wicklungsluftspalte vorgesehen ist, um die Streuinduktivität zu erhöhen und durch die Wicklungsluftspalte verursachte Streufelder zu reduzieren, wobei das permeable Material vorzugsweise Ferrit ist.

**13.** Integrierte magnetische Komponente nach Anspruch 3, wobei auf jeder Oberfläche der integrierten magnetischen Komponente eine Platte aus permeablem Material vorgesehen ist, die parallel zu den Schenkeln der Magnetkernelemente angeordnet ist, um durch die Wicklungsluftspalte verursachte Streufelder einzudämmen.

**14.** Bidirektionaler LLC-Resonanzumrichter mit einem Eingangsumrichter (1), einem Ausgangsumrichter (2), einem Transformator (E3, E4, U3, U4, W3, W4, P1, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$), einer Reihenresonanzinduktivität auf einer Primärseite des Transformators, einer Reihenresonanzinduktivität auf einer Sekundärseite des Transformators und einer integrierten magnetischen Komponente nach einem der vorhergehenden Ansprüche.

**15.** Bidirektionaler LLC-Resonanzumrichter nach Anspruch 14, der außerdem zwei Resonanzkondensatoren (Cr1, Cr2) umfasst.

**16.** Elektrofahrzeug mit einer integrierten magnetischen Komponente nach einem der Ansprüche 1 bis 13, wobei das Elektrofahrzeug vorzugsweise ein Chassis mit einer Kavität aufweist, wobei die integrierte magnetische Komponente in der Kavität vergossen ist.

## Revendications

**1.** Composant magnétique intégré (E1-E4, U1-U4, W1-W4, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$, Lr1, Lr2, Lr11, Lr12, Lr21, Lr22, Lr31, Lr32, $g_1$, $g_2$, $g_{11}$, $g_{12}$, $g_{21}$, $g_{22}$, $g_{31}$, $g_{32}$) pour convertisseur résonant LLC bidirectionnel avec un convertisseur d'entrée (1), un convertisseur de sortie (2), un transformateur (E3, E4, U3, U4, W3, W4, P1, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$), une première inductance résonante série côté primaire du transformateur et une deuxième inductance résonante série côté secondaire du transformateur, le composant magnétique intégré comprenant un premier élément de noyau magnétique (E3, U3, W3) et un deuxième élément de noyau magnétique (E4, U4, W4), dans lequel chacun des premier et deuxième élément de noyaux magnétiques (E3, E4, U3, U4, W3, W4) comprend une culasse et au moins deux pattes, dans lequel

a) le premier et le deuxième élément de noyaux magnétiques (E3, E4, U3, U4, W3, W4) sont empilés l'un sur l'autre de sorte que leurs pattes soient disposées en rangée et se fassent face,
b) un premier enroulement primaire (P1, P11) du transformateur est disposé sur une première branche d'enroulement primaire d'un du premier ou deuxième élément de noyau magnétique (E3, E4, U3, U4, W3, W4), un premier enroulement secondaire (S1, S12) du transformateur est disposé sur une première branche d'enroulement secondaire d'un du premier ou deuxième élément de noyau magnétique (E3, E4, U3, U4, W3, W4), dans lequel la première branche d'enroulement primaire et la première branche d'enroulement secondaire englobent le même flux magnétique (3),
c) dans lequel le composant magnétique intégré comprend en outre un troisième élément de noyau magnétique (E1, U1, W1) et un quatrième élément de noyau magnétique (E2, U2, W2), dans lequel chacun des troisième et quatrième éléments de noyau magnétique (E1, U1, W1, E2, U2, W2) comprend une culasse et au moins deux pattes, et **caractérisé en ce que** le troisième élément de noyau magnétique (E1, U1, W1) est empilé sur le premier élément de noyau magnétique (E3, U3, W3), un premier enroulement résonant série (Lr1, Lr11) de la première inductance résonante série est disposé sur une première branche d'enroulement résonant série du troisième élément de noyau magnétique (E1, U1, W1) et est connecté en série avec la première partie d'enroulement primaire (P1, P11), dans lequel la première branche d'enroulement résonant série et la première branche d'enroulement primaire sont disposées en rangée et englobent le même flux magnétique (3) et dans lequel un premier entrefer ($g_1$, $g_{11}$) est ménagé entre la première branche d'enroulement résonant série et le premier élément de noyau magnétique (E3, U3, W3),
d) le quatrième élément de noyau magnétique (E2, U2, W2) est empilé sur le deuxième élément de noyau magnétique (E4, U4, W4), de sorte que les branches du quatrième élément de noyau magnétique (E2, U2, W2) soient face à la culasse du deuxième élément de noyau magnétique (E4, U4, W4), une première partie d'enroulement résonant série (Lr2, Lr12) de la deuxième inductance résonante série est disposée sur une première branche d'enroulement résonant série du quatrième élément de noyau magnétique (E2, U2, W2) et est connectée en série avec la première partie d'enroulement secondaire (S1, S12), dans lequel la première branche d'enroulement résonant série du quatrième élément de noyau magnétique (E2, U2, W2) et la première branche d'enroulement secondaire du deuxième élément de noyau magnétique (E4, U4, W4) sont disposées en rangée et englobent le même flux magnétique (3) et dans lequel un deuxième entrefer ($g_2$, $g_{12}$) est ménagé entre la première branche d'enroulement résonant série et le deuxième élément de noyau magnétique (E4, U4, W4) et dans lequel la première partie d'enroulement primaire (P1, P11), la première partie d'enroulement secondaire (S1, S12), la première partie d'enroulement résonant série (Lr1, Lr11) de la première inductance résonante série et la première partie d'enroulement résonant série (Lr2, Lr12) de la deuxième inductance résonante série sont adaptées de telle sorte que les flux magnétiques résultants (3) de ces parties d'enroulement dans la culasse du premier élément de noyau magnétique (E3, U3, W3) se compensent au moins partiellement, et qu'un flux magnétique résultant (3) de ces parties d'enroulement dans la culasse du deuxième élément de noyau magnétique (E4, U4, W4) se compensent au moins partiellement.

2. Composant magnétique intégré selon la revendication 1, dans lequel une deuxième partie d'enroulement primaire (P21, P2) du transformateur est disposée sur une deuxième branche d'enroulement primaire d'un du premier ou du deuxième élément de noyau magnétique (E3, E4, U3, U4, W3, W4), un deuxième enroulement secondaire (S22, S2) du transformateur est disposé sur une deuxième branche d'enroulement secondaire d'un du premier ou du deuxième élément de noyau magnétique (E3, E4, U3, U4, W3, W4), dans lequel la deuxième branche d'enroulement primaire et la deuxième branche d'enroulement secondaire englobent le même flux magnétique (3).

3. Composant magnétique intégré selon les revendications 1 et 2, dans lequel la première partie d'enroulement primaire (P1, P11) et la première partie d'enroulement secondaire (S1, S12) sont disposés à une première distance l'un de l'autre afin de ménager un premier entrefer d'enroulement entre elles et dans lequel la deuxième partie d'enroulement primaire (P2, P21) et la deuxième partie d'enroulement secondaire (S2, S22) sont disposées à une deuxième distance l'une de l'autre afin de ménager un deuxième entrefer d'enroulement entre elles, moyennant quoi une première inductance de fuite générée par ledit premier entrefer d'enroulement et une deuxième inductance de fuite générée par ledit deuxième entrefer d'enroulement sont constituées par la première inductance résonante série et la deuxième inductance résonante série.

4. Composant magnétique intégré selon la revendication 1 ou 2, dans lequel chaque élément de noyau magnétique (U1, U2, U3, U4) est un élément de noyau en U, dans lequel

   a) une deuxième partie d'enroulement résonant série (Lr21) de la première inductance résonante série est disposée sur une deuxième branche d'enroulement résonant série du troisième élément de noyau magnétique (U1) et est connectée en série avec la deuxième partie d'enroulement primaire (P2), dans lequel la deuxième branche d'enroulement résonant série du troisième élément de noyau magnétique (U1) et la deuxième branche d'enroulement primaire sont disposées en rangée et englobent le même flux magnétique (3) ;
   et dans lequel un troisième entrefer ($g_{21}$) est ménagé entre la deuxième branche d'enroulement série du troisième élément de noyau magnétique (U1) et le premier élément de noyau magnétique (U3), une deuxième partie d'enroulement résonant série (Lr22) de la deuxième inductance résonante série est disposée sur une deuxième branche d'enroulement résonant série du quatrième élément de noyau magnétique (U2) et est connectée en série avec la deuxième partie d'enroulement secondaire (S2), dans lequel la deuxième branche d'enroulement résonant série du quatrième élément de noyau magnétique (U2) et la branche d'enroulement secondaire sont disposées en rangée et englobent le même flux magnétique (3) et dans lequel un quatrième entrefer ($g_{22}$) est prévu entre la deuxième branche d'enroulement résonant série du quatrième élément de noyau magnétique (U2) et le deuxième élément de noyau magnétique (U4) et
   b) la première et la deuxième partie d'enroulement primaire (P1, P2), la première et la deuxième partie d'enroulement secondaire (S1, S2), la première et la deuxième partie d'enroulement résonant série (Lr11, Lr21) de la première inductance résonante série et la première et la deuxième partie d'enroulement résonant série (Lr12, Lr22) de la deuxième inductance résonante série sont adaptées de telle sorte qu'un flux magnétique résultant (3) de ces parties d'enroulement dans la culasse du premier élément de noyau magnétique (U3) se compensent au moins partiellement et de sorte qu'un flux magnétique résultant (3) de ces parties d'enroulement dans la culasse du deuxième élément de noyau magnétique (U4) se compensent au moins partiellement.

5. Composant magnétique intégré selon la revendication 3, dans lequel chaque élément de noyau magnétique (U1, U2, U3, U4) est un élément de noyau en U.

6. Composant magnétique intégré selon une quelconque des revendications 1 à 3, dans lequel chaque élément de noyau magnétique (E1, E2, E3, E4) est un élément de noyau en E et dans lequel chaque branche d'enroulement primaire et chaque branche d'enroulement secondaire est une branche extérieure.

7. Composant magnétique intégré selon la revendication 1 ou 2, dans lequel chaque élément de noyau magnétique (E1, E2, E3, E4) est un élément de noyau en E et dans lequel chaque branche d'enroulement primaire et chaque branche d'enroulement secondaire est une branche intérieure.

8. Composant magnétique intégré selon une quelconque des revendications 1 à 3, dans lequel chaque élément de noyau magnétique (W1, W2, W3, W4) est un élément de noyau en W avec une culasse et quatre pattes et dans lequel chaque branche d'enroulement primaire et chaque branche d'enroulement secondaire est une branche intérieure.

9. Composant magnétique intégré selon une quelconque des revendications 1 à 3, dans lequel chaque élément de noyau magnétique (W1, W2, W3, W4) est un élément de noyau à cinq pattes avec une culasse et cinq pattes, dans lequel une troisième partie d'enroulement primaire (P31) du transformateur est disposée sur une troisième branche d'enroulement primaire d'un du premier ou du deuxième élément de noyau magnétique (W3, W4), une troisième partie d'enroulement secondaire (S32) du transformateur est disposé sur une troisième branche d'enroulement secondaire d'un du premier ou du deuxième élément de noyau magnétique (W3, W4), dans lequel la troisième branche d'enroulement primaire et la troisième branche d'enroulement secondaire sont disposées en rangée et englobent le même flux magnétique (3).

10. Composant magnétique intégré selon la revendication 9, dans lequel la première et la troisième branche d'enroulement primaire et la première et la troisième branche d'enroulement secondaire constituent une branche extérieure et dans lequel la deuxième branche d'enroulement primaire et la deuxième branche d'enroulement secondaire constituent une branchecentrale.

11. Composant magnétique intégré selon la revendication 9, dans lequel la première, deuxième et troisième branche d'enroulement primaire et la première, deuxième et troisième branche d'enroulement secondaire constituent une branche intérieure.

12. Composant magnétique intégré selon la revendication 3, dans lequel un élément de remplissage en matériau perméable est prévu dans au moins un, de préférence dans tous, les entrefers d'enroulements afin d'augmenter l'inductance de fuite et de réduire les champs parasites causés par les entrefers d'enroulements, dans lequel le matériau perméable est de préférence de la ferrite.

13. Composant magnétique intégré selon la revendication 3, dans lequel une plaque en matériau perméable est prévue sur chaque surface du composant magnétique intégré, qui est disposée parallèlement aux pattes des éléments de noyau magnétique, afin de contenir les champs parasites causés par les entrefers d'enroulements.

14. Convertisseur résonant LLC bidirectionnel comprenant un convertisseur d'entrée (1), un convertisseur de sortie (2), un transformateur (E3, E4, U3, U4, W3, W4, P1, P2, P11, P21, P31, S1, S2, S12, S22, S32, $g_{34}$, $g_{341}$, $g_{342}$, $g_{134}$, $g_{234}$, $g_{231}$, $g_{232}$, $g_{233}$), une inductance résonante série côté primaire du transformateur, une inductance résonante série côté secondaire du transformateur et un composant magnétique intégré selon une quelconque des revendications précédentes.

15. Convertisseur résonant LLC bidirectionnel selon la revendication 14, comprenant en outre deux condensateurs résonants (Cr1, Cr2).

16. Véhicule électrique comprenant un composant magnétique intégré selon une quelconque des revendications 1 à 13, dans lequel le véhicule électrique comprend de préférence un châssis comportant une cavité, dans lequel le composant magnétique intégré est encastré dans la cavité.

**Fig. 1**

**Fig. 2**

**Fig. 3**

Fig. 4

Fig. 5

Fig. 6

Fig. 7

Fig. 8

**Fig. 9**

**Fig. 10**

**Fig. 11**

**Fig. 12**

**Fig. 13**

**Fig. 14**

Fig. 15

Fig. 16

Fig. 17

Fig. 18

Fig. 19

Fig. 20

Fig. 21

Fig. 22

# Fig. 23

# Fig. 24

**Fig. 25**

**Fig. 26**

**Fig. 27**

**Fig. 29**          **Fig. 28**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106936320 A
- CN 108736734 A
- EP 3133614 A1
- US 2018061560 A1